# EUROPEAN PATENT APPLICATION

(11) **EP 2 626 660 A1**
(43) Date of publication of application: **14.08.2013**
(21) Application number: 11830448.4
(22) Date of filing: 23.08.2011
(51) Int. Cl.: F27D 17/00

(54) **THERMAL EFFICIENCY IMPROVEMENT METHOD FOR HEATING FURNACE AND THERMAL EFFICIENCY IMPROVEMENT DEVICE FOR HEATING FURNACE**

(30) Priority: 07.10.2010 JP 2010227693
(71) Applicant: Ube Industries, Ltd., Ube City, Yamaguchi 755-8633 (JP)
(72) Inventor: YAMAMURA Takemi, Ube-shi Yamaguchi 755-0001 (JP); NAKAGAWA Narihito, Ube-shi Yamaguchi 755-0001 (JP); HISAYUKI Terumi, Ube-shi Yamaguchi 755-0001 (JP); MATSUMURA Yoshikazu, Ube-shi Yamaguchi 755-0001 (JP)
(74) Representative: Vossius & Partner
(86) International application number: PCT/JP2011/068969
(87) International publication number: WO 2012/046515

(57) **Abstract**

A thermal efficiency improvement device 10 for a heating furnace is installed in an exhaust port 12 of the heating furnace to reduce effluent heat from the exhaust port 12 to the outside. The device 10 disposed along a flow of exhaust gas passing inside the exhaust port 12 includes at least one heat-resistant fabric members 15, 16 heated by exhaust gas and supporting members 13, 14, 17, 18, 19 fixing the fabric members 15, 16 to the exhaust port 12, and puts radiant heat from the heated fabric members 15, 16 back into the heating furnace to reduce effluent heat to the outside. By installing the device in an exhaust port of an existing or newly-built heating furnace, radiant heat from the fabric members heated by exhaust gas is put back into the heating furnace, and effluent heat from the exhaust port is reduced.

## Description

### TECHNICAL FIELD

The present invention relates to a thermal efficiency improvement method for a heating furnace and a thermal efficiency improvement device for a heating furnace, the method in which the device is installed in, e.g., an inlet (including a passage) of an exhaust port of the heating furnace, the device is heated by exhaust gas passing inside the exhaust port, radiant heat from an inside of the heating furnace is reflected and returned to the heating furnace, and thereby effluent heat from the exhaust port to out of the heating furnace is reduced.

### BACKGROUND ART

In a gas-fired heating furnace or a controlled atmosphere heating furnace, the most serious heat loss is caused by hot exhaust gas emitted through an exhaust port to out of the heating furnace. Therefore, for example, Patent Literature 1 discloses a method in which a material having high radiant efficiency is provided on a wall inside a furnace. Also, Non-Patent Literature 1 discloses a method in which a non-woven fabric mat made of silicon carbide (hereinafter simply referred to as a mat) is attached as a heat filter to an exhaust port provided in a ceiling of a furnace, and further, as a heat reflector to the ceiling and a side wall inside the furnace, thereby sensible heat of the hot exhaust gas is recovered in the furnace.

### CITATION LIST

### PATENT LITERATURE

[Patent Literature 1] Japanese Unexamined Patent Application Publication No. H08-210782

### NON-PATENT LITERATURE

[Non-Patent Literature 1] Kenji Suzuki, et al., "Si-C-(M)-O-kei Sen'i Fushokufu Mat ni yoru Gas Nensho Kanetsuro no Sho Energy-ka Narabini Koseinoka (Saving Energy and Enhancing Performance of Gas-fired Heating Furnace by Non-woven Fabric Mat of Si-C-(M)-O Fiber)", Industrial Heating, Japan Industrial Furnace Manufacturers Association, July 15, 2007, Vol. 44, No. 4, pp. 17-25

### SUMMARY OF INVENTION

### TECHNICAL PROBLEM

Here, to attach the mat having a flexible body to the ceiling or the side wall inside the furnace, ceramic adhesive is commonly used. However, inside the furnace with a high temperature of, e.g., 1000°C or more, and with the hot exhaust gas flowing at high speed, it is difficult to keep the mat attached securely to the ceiling or the side wall inside the furnace only by the ceramic adhesive for a long period of time, thus it is likely that the mat will fall off while in use. In addition, the mat itself, having the flexible body, may not withstand mechanical shock or abrasion by the hot exhaust gas for a long period of time. Also, since firmness (shape retention) of the mat having the flexible body is extremely low, attaching operation becomes very difficult, and it is impossible to combine the mats in a way that the mats sustain each other. Therefore, if a part of the mat attached on the ceiling or the side wall inside the furnace is detached, the detachment may spread throughout the mat (all of the mat may be influenced by the detached part), and the mat may fall off. Further, once the mat falls off, adjacent mats may be influenced, and the mats may start falling off one after another.

In view of the above circumstances, an object of the present invention is to provide a thermal efficiency improvement method and a thermal efficiency improvement device for a heating furnace, in the method the device is installed in an exhaust port of an existing heating furnace or a newly-built heating furnace, radiant heat from a fabric member (of the device) heated by exhaust gas is returned to the heating furnace, and thereby effluent heat from the exhaust port is reduced.

### SOLUTION TO PROBLEM

To accomplish the above object, a thermal efficiency improvement method for a heating furnace according to a first aspect of the present invention is the method comprising: installing at least one heat-resistant fabric member in an exhaust port of the heating furnace by a supporting member along a flow of exhaust gas passing inside the exhaust port; and heating the fabric member by the exhaust gas passing through the exhaust port and putting radiant heat from the heated fabric member back into the heating furnace to reduce effluent heat from the exhaust port to out of the heating furnace.

In the method according to the first aspect of the present invention, it is preferable that a plurality of the fabric members are installed, and the plurality of the fabric members cross at one point when viewed in plan to radially form an assembly.

In the method according to the first aspect of the present invention, the assembly can be formed by two of the fabric members, and a crossing angle between the fabric members can be 10 to 90 degrees.
Here, the crossing angle less than 10 degrees is undesirable because it makes hard to heat the fabric members uniformly due to a difference between a flow rate of exhaust gas flowing inside the fabric members and a flow rate of exhaust gas flowing outside the fabric members. On the other hand, for an assembly having a crossing angle between the fabric members of more than 90 degrees and less than 170 degrees, an effect caused by a flow of exhaust gas is the same as for the assembly having the crossing angle of 10 to 90 degrees. Therefore, a lower limit of the crossing angle is set at 10 degrees and an upper limit thereof is set at 90 degrees.

In the method according to the first aspect of the present invention, it is preferable that the assembly is formed by three or more of the fabric members, crossing angles between the adjacent fabric members are all equally 5 degrees or more.
It is undesirable to set the crossing angles at less than 5 degrees because resistance caused while the exhaust gas passes close to a crossing section of the fabric members becomes large. Here, if n is the number of the fabric members of the assembly and all of the crossing angles between the adjacent fabric members are equal, the crossing angle is 360 degrees/2n. Further, the upper limit of the crossing angle is 60 degrees when the assembly includes three of the fabric members.

In the method according to the first aspect of the present invention, it is preferable that the assembly is formed by three or more of the fabric members, and the fabric members cross at two or more points when viewed in plan to divide an inside of the exhaust port into a plurality of branch passages along a flow of the exhaust gas passing inside the exhaust port.

In the method according to the first aspect of the present invention, it is preferable that the assembly includes (a) a first fabric member group including two of the fabric members disposed in parallel at a distance of 5 mm or more and (b) one of the fabric member crossing the first fabric member group at a crossing angle of 5 degrees or more and less than 90 degrees or at a crossing angle of 90 degrees.
Here, it is undesirable to dispose the two fabric members of the first group at a distance of less than 5 mm because resistance caused while the exhaust gas passes between the fabric members becomes large. Also, it is undesirable to set the crossing angle at less than 5 degrees because resistance caused while the exhaust gas passes close to crossing sections of the fabric members becomes large. On the other hand, for an assembly having a crossing angle between the fabric members of more than 90 degrees and less than 175 degrees, the effect caused by the flow of the exhaust gas is the same as for the assembly having the crossing angle of 5 degrees or more and less than 90 degrees. Therefore, a lower limit of the crossing angle is set at 5 degrees and an upper limit thereof is set at 90 degrees.

In the method according to the first aspect of the present invention, it is preferable that the assembly includes (a) a first fabric member group including two or more of the fabric members disposed in parallel at a distance of 5 mm or more and (b) a second fabric member group including two or more of the fabric members disposed in parallel at a distance of 5 mm or more, and the fabric members of the first and second groups cross at a crossing angle of 5 degrees or more and less than 90 degrees or at a crossing angle of 90 degrees.
Here, it is undesirable to dispose the fabric members of the first and second groups at a distance of less than 5 mm because resistance caused while the exhaust gas passes between the fabric members becomes large. Also, it is undesirable to set the crossing angle at less than 5 degrees because resistance caused while the exhaust gas passes close to crossing sections of the fabric members becomes large. On the other hand, for an assembly having a crossing angle between the fabric members of more than 90 degrees and less than 175 degrees, the effect caused by the flow of the exhaust gas is the same as for the assembly having the crossing angle of 5 degrees or more and less than 90 degrees. Therefore, a lower limit of the crossing angle is set at 10 degrees and an upper limit thereof is set at 90 degrees.

In the method according to the first aspect of the present invention, it is preferable that both ends in width directions of the fabric members are in contact with an inner wall of the exhaust port.

In the method according to the first aspect of the present invention, the fabric member can be made of a woven fabric having a thickness of 0.2 to 10 mm and an open area ratio of 30% or less.
Alternatively, the fabric member can be made of a non-woven fabric having a thickness of 1 to 10 mm and a void volume fraction of 50 to 97%.
Further, the fabric member can be formed from a laminated fabric material made by laminating at least one of a woven fabric having a thickness of 0.2 to 10 mm and an open area ratio of 30% or less and a non-woven fabric having a thickness of 1 to 10 mm and a void volume fraction of 50 to 97%.
Here, the woven fabric can be one of a plain-woven fabric, a satin-woven fabric, a twill-woven fabric, a three-dimensional woven fabric, and a multiaxial fabric.

In the method according to the first aspect of the present invention, it is preferable that the fabric member is composed of a composite inorganic fiber having a multi-layered structure including an inner layer and an outer layer, and where a first group includes the following elements: Al, Ti, Cr, Fe, Si, Co, Ni, Cu, Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os, the outer layer is composed of a material A consisting of one of the following: (1) an oxide of one element selected from the first group; (2) a complex oxide of two or more elements selected from the first group; (3) an oxide solid solution of two or more elements selected from the first group; (4) the oxide and the complex oxide; (5) the oxide and the oxide solid solution; (6) the complex oxide and the oxide solid solution; and (7) the oxide, the complex oxide, and the oxide solid solution, a value of a thermal expansion coefficient of the inorganic substance forming the outer layer is within a range of ±10% of a value of a thermal expansion coefficient of the inorganic substance forming the inner layer, and a thickness of the outer layer is 0.2 to 10 µm.
Here, it is preferable that where a second group includes the following elements: Y, Yb, Er, Ho, and Dy; a third group includes the following elements: Y, Yb, Er, Ho, Dy, Gd, Sm, Nd, and Lu; at least one of the elements selected from the second group is QE; and at least one of the elements selected from the third group is RE, the oxide solid solution is composed of at least one of the following general formulae: QE₂Si₂O₇, QESiO₅, RE₃Al₅O₁₂, and REAlO₃.

In the method according to the first aspect of the present invention, it is preferable that the inner layer is composed of an inorganic substance containing Si, C, O, and M1, where M1 is a metal component selected from Ti, Zr, and Al.
Here, the inner layer can be composed of an aggregate of crystalline ultrafine particles and an amorphous inorganic substance, where the crystalline ultrafine particles have particle sizes of 700 nm or less and contain (mainly include) (1) β-SiC, (2) M2C, and (3) at least one of a solid solution of β-SiC and M2C and M2C₁₋ₓ (0<x<1), M1 is the metal component selected from Ti, Zr, and Al, M2 is a metal component selected from Ti and Zr, M2C is a carbide of M2, and the amorphous inorganic substance contains Si, C, O, and M1 and exists between the crystalline ultrafine particles.
Further, the inner layer can be composed of an inorganic substance containing Si, C, and O.
Also, the inner layer can be composed of an aggregate of crystalline ultrafine particles of β-SiC having particle sizes of 700 nm or less and an amorphous inorganic substance containing Si, C, and O and existing between the crystalline ultrafine particles.
Alternatively, the inner layer can be composed of a crystalline inorganic substance consisting of microcrystals of β-SiC.

In the method according to the first aspect of the present invention, it is preferable that the fabric member is composed of an inorganic fiber composed of an inorganic substance containing Si, C, O, and M1, where M1 is a metal component selected from Ti, Zr, and Al.
Here, the fabric member can be composed of an inorganic fiber composed of an inorganic substance containing Si, C, and O.
Further, the fabric member can be composed of an inorganic fiber composed of a crystalline inorganic substance consisting of microcrystals of β-SiC.
Also, the fabric member can be composed of an inorganic fiber composed of an amorphous inorganic substance consisting of A1, Si, and O.

A thermal efficiency improvement device for a heating furnace according to a second aspect of the present invention is the device installed in an exhaust port of the heating furnace to reduce effluent heat from the exhaust port to out of the heating furnace, the device comprising: at least one fabric member disposed along a flow of exhaust gas passing inside the exhaust port and heated by the exhaust gas; and a supporting member fixing the fabric member to the exhaust port, whereby radiant heat from the heated fabric member is put back into the heating furnace to reduce effluent heat from the exhaust port to out of the heating furnace.

In the device according to the second aspect of the present invention, it is preferable that the device includes two of the fabric members, the fabric members cross at one point when viewed in plan to radially form an assembly, and a crossing angle between the fabric members is 10 to 90 degrees.
Here, the crossing angle less than 10 degrees is undesirable because it makes hard to heat the fabric members uniformly due to a difference between a flow rate of exhaust gas flowing inside the fabric members and a flow rate of exhaust gas flowing outside the fabric members. On the other hand, for an assembly having a crossing angle between the fabric members of more than 90 degrees and less than 170 degrees, an effect caused by a flow of exhaust gas is the same as for the assembly having the crossing angle of 10 to 90 degrees. Therefore, a lower limit of the crossing angle is set at 10 degrees and an upper limit thereof is set at 90 degrees.

In the device according to the second aspect of the present invention, it is preferable that the assembly is formed by three or more of the fabric members, the fabric members cross at one point when viewed in plan to radially form an assembly, crossing angles between the adjacent fabric members are all equally 5 degrees or more.
It is undesirable to set the crossing angles at less than 5 degrees because resistance caused while the exhaust gas passes close to a crossing section of the fabric members becomes large. Here, if n is the number of the fabric members of the assembly and all of the crossing angles between the adjacent fabric members are equal, the crossing angle is 360 degrees/2n. Further, the upper limit of the crossing angle is 60 degrees when the assembly includes three of the fabric members.

In the device according to the second aspect of the present invention, it is preferable that the assembly is formed by three or more of the fabric members, and the fabric members cross at two or more points when viewed in plan to divide an inside of the exhaust port into a plurality of branch passages along a flow of the exhaust gas passing inside the exhaust port.

In the device according to the second aspect of the present invention, the assembly can include (a) a first fabric member group including two of the fabric members disposed in parallel at a distance of 5 mm or more and (b) one of the fabric member crossing the first fabric member group at a crossing angle of 5 degrees or more.
Alternatively, the assembly can include (a) a first fabric member group including two or more of the fabric members disposed in parallel at a distance of 5 mm or more and (b) a second fabric member group including two or more of the fabric members disposed in parallel at a distance of 5 mm or more, and the fabric members of the first and second groups cross at a crossing angle of 5 degrees or more.
Here, it is undesirable to dispose the fabric members of the first and second groups at a distance of less than 5 mm because resistance caused while the exhaust gas passes between the fabric members becomes large. Also, it is undesirable to set the crossing angle at less than 5 degrees because resistance caused while the exhaust gas passes close to crossing sections of the fabric members becomes large. On the other hand, for an assembly having a crossing angle between the fabric members of more than 90 degrees and less than 175 degrees, the effect caused by the flow of the exhaust gas is the same as for the assembly having the crossing angle of 5 degrees or more and less than 90 degrees. Therefore, a lower limit of the crossing angle is set at 5 degrees and an upper limit thereof is set at 90 degrees.

In the device according to the second aspect of the present invention, it is preferable that both ends in width directions of the fabric members are in contact with an inner wall of the exhaust port.

In the device according to the second aspect of the present invention, the fabric member can be made of a woven fabric having a thickness of 0.2 to 10 mm and an open area ratio of 30% or less.
Alternatively, the fabric member can be made of a non-woven fabric having a thickness of 1 to 10 mm and a void volume fraction of 50 to 97%.
Further, the fabric member can be formed from a laminated fabric material made by laminating at least one of a woven fabric having a thickness of 0.2 to 10 mm and an open area ratio of 30% or less and a non-woven fabric having a thickness of 1 to 10 mm and a void volume fraction of 50 to 97%.
Here, the woven fabric can be one of a plain-woven fabric, a satin-woven fabric, a twill-woven fabric, a three-dimensional woven fabric, and a multiaxial fabric.

In the device according to the second aspect of the present invention, the supporting member can include a cylindrical body having slits in which the fabric members are mounted, and a fixing means fixing the cylindrical body to the inner wall of the exhaust port along the flow of the exhaust gas.
Here, it is preferable that the cylindrical body includes one of a high heat-resistant oxide and a high heat-resistant non-oxide.
Also, it is preferable that the cylindrical body includes a high heat-resistant non-oxide, and a coating layer of a heat-resistant oxide is formed on a surface of the cylindrical body.

In the device according to the second aspect of the present invention, it is preferable that the fixing means is located on an exhaust gas inlet side of the cylindrical body, and includes at least one heat-resistant fastening member whose ends on radially inward side of the cylindrical body is in contact with or fixed to the cylindrical body and whose ends on radially outward side of the cylindrical body is fixed into the inner wall of the exhaust port.
Also, it is preferable that the fastening member is a headed bolt whose end is screwed into the inner wall of the exhaust port. The fastening member can be composed of one of a high heat-resistant oxide and a high heat-resistant non-oxide.
Here, it is preferable that the fastening member includes a high heat-resistant non-oxide, and a coating layer of a heat-resistant oxide is formed on a surface of the fastening member.

In the device according to the second aspect of the present invention, it is preferable that the fixing means includes at least one heat-resistant second fastening member. Here, the second fastening member penetrates an exhaust gas outlet side of the cylindrical body disposed in the exhaust port with a gap between the inner wall of the exhaust port, and both ends of the second fastening member are fixed into the inner wall of the exhaust port.
Also, it is preferable that the second fastening member includes a ceramic bolt and ceramic nuts threadedly engaged with the ceramic bolt. The second fastening member can be composed of one of a high heat-resistant oxide and a high heat-resistant non-oxide.
Further, it is preferable that the second fastening member includes a high heat-resistant non-oxide, and a coating layer of a heat-resistant oxide is formed on a surface of the second fastening member.

In the device according to the second aspect of the present invention, the fixing means can include a filler made by mixing an heat-resistant inorganic adhesive agent into a heat-resistant strip-shaped fabric sheet. The filler is wrapped around an outer periphery of the cylindrical body to fill a gap between the cylindrical body and the exhaust port when the cylindrical body is inserted into the exhaust port.
Here, the filler can be provided on at least one of the exhaust gas inlet side and the exhaust gas outlet side of the cylindrical body.
Further, the strip-shaped fabric sheet can be composed of one of a woven fabric having a thickness of 0.2 to 10 mm and an open area ratio of 30% or less and a non-woven fabric having a thickness of 1 to 10 mm and a void volume fraction of 50 to 97%.
Also, the heat-resistant inorganic adhesive agent can be made of alumina.

In the device according to the second aspect of the present invention, it is preferable that the fabric member is formed by one of an inorganic fiber and a composite inorganic fiber having a multi-layered structure including an inner layer and an outer layer.

In the device according to the second aspect of the present invention, it is preferable that the fabric member is composed of the composite inorganic fiber, and where a first group includes the following elements: Al, Ti, Cr, Fe, Si, Co, Ni, Cu, Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os, the outer layer of the composite inorganic fiber is composed of a material A consisting of one of the following: (1) an oxide of one element selected from the first group; (2) a complex oxide of two or more elements selected from the first group; (3) an oxide solid solution of two or more elements selected from the first group; (4) the oxide and the complex oxide; (5) the oxide and the oxide solid solution; (6) the complex oxide and the oxide solid solution; and (7) the oxide, the complex oxide, and the oxide solid solution, and further wherein a value of a thermal expansion coefficient of the inorganic substance forming the outer layer is within a range of ±10% of a value of a thermal expansion coefficient of the inorganic substance forming the inner layer, and a thickness of the outer layer is 0.2 to 10 µm.
Also, it is preferable that where a second group includes the following elements: Y, Yb, Er, Ho, and Dy; a third group includes the following elements: Y, Yb, Er, Ho, Dy, Gd, Sm, Nd, and Lu; at least one of the elements selected from the second group is QE; and at least one of the elements selected from the third group is RE, the oxide solid solution consists of at least one of the following general formulae: QE₂Si₂O₇, QESiO₅, RE₃Al₅O₁₂, and REAlO₃.

In the device according to the second aspect of the present invention, it is preferable that the inner layer is composed of an inorganic substance containing Si, C, O, and M1, where M1 is a metal component selected from Ti, Zr, and Al.
Here, the inner layer can be composed of an aggregate of crystalline ultrafine particles and an amorphous inorganic substance, where the crystalline ultrafine particles have particle sizes of 700 nm or less and contain (mainly include) (1) β-SiC, (2) M2C, and (3) at least one of a solid solution of β-SiC and M2C and M2C₁₋ₓ (0<x<1), M1 is the metal component selected from Ti, Zr, and Al, M2 is a metal component selected from Ti and Zr, M2C is a carbide of M2, and the amorphous inorganic substance contains Si, C, O, and M1 and exists between the crystalline ultrafine particles.
Further, the inner layer can be composed of an inorganic substance containing Si, C, and O.
Also, the inner layer can be composed of an aggregate of crystalline ultrafine particles of β-SiC having particle sizes of 700 nm or less and an amorphous inorganic substance containing Si, C, and O and existing between the crystalline ultrafine particles.
Alternatively, the inner layer can be composed of a crystalline inorganic substance consisting of microcrystals of β-SiC.

In the device according to the second aspect of the present invention, the fabric member can be composed of an inorganic fiber composed of an inorganic substance containing Si, C, O, and M1, where M1 is a metal component selected from Ti, Zr, and Al.
Here, the fabric member can be composed of an inorganic fiber composed of an inorganic substance containing Si, C, and O.
Further, the fabric member can be composed of an inorganic fiber composed of a crystalline inorganic substance consisting of microcrystals of β-SiC.
Also, the fabric member can be composed of an inorganic fiber composed of an amorphous inorganic substance consisting of Al, Si, and O.

In the device according to the second aspect of the present invention, it is preferable that the strip-shaped fabric sheet is made of one of a composite inorganic fiber having a multi-layered structure including an inner layer and an outer layer and an inorganic fiber.
Here, the inorganic fiber or the composite inorganic fiber forming the strip-shaped fabric sheet can have the same composition as the inorganic fiber or the composite inorganic fiber forming the fabric member.

### ADVANTAGEOUS EFFECTS OF INVENTION

In the thermal efficiency improvement method for the heating furnace according to the first aspect of the present invention, since at least one of the heat-resistant fabric members is installed in the exhaust port of the heating furnace along the flow of exhaust gas passing inside the exhaust port, the flow of the exhaust gas is not hindered while the fabric member can be in contact with the exhaust gas sufficiently. Thereby, the fabric member is heated by the exhaust gas efficiently, and a temperature inside the exhaust port and a temperature of the exhaust gas are decreased. As a result, by putting radiant heat from the heated fabric member back into the heating furnace, effluent heat from the exhaust port to out of the heating furnace can be reduced, and energy consumed by the heating furnace (fuel consumption) can be reduced. Also, it is possible to make a temperature distribution in the heating furnace uniform.
Further, since the flow of the exhaust gas is not hindered even with the fabric member installed in the exhaust port, the flow of gas inside the heating furnace can be kept in the same way as without the fabric member in the exhaust port, while it is not likely that a pressure in the furnace increases. Therefore, the method can be readily applied to an existing heating furnace.

In the method according to the first aspect of the present invention, if a plurality of the fabric members are installed and the plurality of the fabric members cross at one point when viewed in plan to radially form the assembly, the flow of the exhaust gas is not hindered even with the plurality of the fabric members used, while the fabric members can be in contact with the exhaust gas sufficiently.

In the method according to the first aspect of the present invention, if the assembly is formed by two of the fabric members and the crossing angle between the fabric members is 10 to 90 degrees, the flow of the exhaust gas passing inside the fabric members and the flow of the exhaust gas passing outside the fabric members can be the same, thus the fabric members can be efficiently heated by heat of the exhaust gas. Thereby, radiant heat from the heated fabric members can be efficiently put back into the heating furnace.
Also, if the assembly is formed by three or more of the fabric members, and the crossing angles between the adjacent fabric members are all equally 5 degrees or more, the exhaust gas can pass between the fabric members uniformly, thus the fabric members can be efficiently heated by heat of the exhaust gas. Thereby, radiant heat from the heated fabric members can be efficiently put back into the heating furnace.

In the method according to the first aspect of the present invention, if the assembly is formed by three or more of the fabric members, and the fabric members cross at two or more points when viewed in plan to divide the inside of the exhaust port into a plurality of the branch passages along the flow of the exhaust gas passing inside the exhaust port, heat of the exhaust gas passing inside the exhaust port can be used efficiently.
Here, if the assembly includes (a) the first fabric member group including two of the fabric members disposed in parallel at the distance of 5 mm or more and (b) one of the fabric member crossing the first fabric member group at the crossing angle of 5 degrees or more and less than 90 degrees or at the crossing angle of 90 degrees, the three fabric members can be efficiently heated by the exhaust gas passing inside the exhaust port. Thereby, radiant heat from the heated fabric members can be efficiently put back into the heating furnace.
Also, if the assembly includes (a) the first fabric member group including two or more of the fabric members disposed in parallel at the distance of 5 mm or more and (b) the second fabric member group including two or more of the fabric members disposed in parallel at the distance of 5 mm or more, and the fabric members of the first and second groups cross at the crossing angle of 5 degrees or more and less than 90 degrees or at the crossing angle of 90 degrees, the fabric members can be efficiently heated by the exhaust gas passing inside the exhaust port. Thereby, radiant heat from the heated fabric members can be efficiently put back into the heating furnace.

In the method according to the first aspect of the present invention, if the both ends in the width directions of the fabric members are in contact with the inner wall of the exhaust port, the exhaust gas flows along the fabric members without fail, thus the fabric members can be efficiently heated.

In the method according to the first aspect of the present invention, if the fabric member is made of the woven fabric having the thickness of 0.2 to 10 mm and the open area ratio of 30% or less, or if the fabric member is made of the non-woven fabric having the thickness of 1 to 10 mm and the void volume fraction of 50% to 97%, the exhaust gas can pass through the fabric member, thus the fabric member can be heated more efficiently and uniformly.
Further, if the fabric member is formed from the laminated fabric material made by laminating at least one of the woven fabric having the thickness of 0.2 to 10 mm and the open area ratio of 30% or less and the non-woven fabric having the thickness of 1 to 10 mm and the void volume fraction of 50 to 97%, a variety of the fabric members having different thicknesses can be easily made by changing the number of the woven fabrics and the non-woven fabrics.
Here, if the woven fabric is one of the plain-woven fabric, the satin-woven fabric, the twill-woven fabric, the three-dimensional woven fabric, and the multiaxial fabric, the fabric member suitable for a purpose can be prepared by selecting a kind of the woven fabric.

In the method according to the first aspect of the present invention, the fabric member is composed of the composite inorganic fiber having the multi-layered structure including the inner layer and the outer layer, and where the first group includes the following elements: Al, Ti, Cr, Fe, Si, Co, Ni, Cu, Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os, the outer layer is composed of the material A consisting of one of the following: (1) the oxide of one element selected from the first group; (2) the complex oxide of two or more elements selected from the first group; (3) the oxide solid solution of two or more elements selected from the first group; (4) the oxide and the complex oxide; (5) the oxide and the oxide solid solution; (6) the complex oxide and the oxide solid solution; and (7) the oxide, the complex oxide, and the oxide solid solution, a value of a thermal expansion coefficient of the inorganic substance forming the outer layer is within a range of ±10% of a value of a thermal expansion coefficient of the inorganic substance forming the inner layer, and a thickness of the outer layer is 0.2 to 10 µm. In this case, it is possible to prevent the outer layer from coming off of the inner layer even if a temperature of the fabric member is changed.

In the method according to the first aspect of the present invention, where the second group includes the following elements: Y, Yb, Er, Ho, and Dy; the third group includes the following elements: Y, Yb, Er, Ho, Dy, Gd, Sm, Nd, and Lu; at least one of the elements selected from the second group is QE; at least one of the elements selected from the third group is RE, and the oxide solid solution consists of at least one of the following general formulae: QE₂Si₂O₇, QESiO₅, RE₃Al₅O₁₂, and REAlO₃. In this case, heat resistance and corrosion resistance of the oxide solid solution can be enhanced.

In the method according to the first aspect of the present invention, the inner layer is composed of one of the following: (1) the inorganic substance containing Si, C, O, and M1, where M1 is the metal component selected from Ti, Zr, and Al; (2) the aggregate of crystalline ultrafine particles and the amorphous inorganic substance, where the crystalline ultrafine particles have the particle sizes of 700 nm or less and contain (i) β-SiC, (ii) M2C, and (iii) at least one of the solid solution of β-SiC and M2C and M2C₁₋ₓ (0<x<1), M1 is the metal component selected from Ti, Zr, and Al, M2 is the metal component selected from Ti and Zr, M2C is the carbide of M2, and the amorphous inorganic substance contains Si, C, O, and M1 and exists between the crystalline ultrafine particles; (3) the inorganic substance containing Si, C, and O; (4) the aggregate of crystalline ultrafine particles of β-SiC having the particle sizes of 700 nm or less and the amorphous inorganic substance containing Si, C, and O and existing between the crystalline ultrafine particles; and (5) the crystalline inorganic substance consisting of the microcrystals of β-SiC. In this case, specific heat of the fabric member is low, and thus the temperature fluctuation of the fabric member can be readily followed. When the temperature of the fabric members is high, a reflection efficiency of the radiant heat can be enhanced.

In the method according to the first aspect of the present invention, if the fabric member is composed of the inorganic fiber composed of one of the following: (1) the inorganic substance containing Si, C, O, and M1, where M1 is the metal component selected from Ti, Zr, and Al; (2) the inorganic substance containing Si, C, and O; and (3) the crystalline inorganic substance consisting of the microcrystals of β-SiC. In this case, specific heat of the fabric member is low, and thus the temperature fluctuation of the fabric member can be readily followed. When the temperature of the fabric members is high, a reflection efficiency of the radiant heat can be enhanced.
Further, if the fabric member is composed of the inorganic fiber composed of the amorphous inorganic substance consisting of Al, Si, and O, the fabric member can be used in an oxidizing atmosphere.

In the thermal efficiency improvement device for the heating furnace according to the second aspect of the present invention, since at least one of the heat-resistant fabric members is installed in the exhaust port of the heating furnace along a flow of exhaust gas passing inside the exhaust port, the flow of the exhaust gas is not hindered while the fabric member can be in contact with the exhaust gas sufficiently, and thus the fabric member is heated by the exhaust gas efficiently. Thereby, by putting radiant heat from the heated fabric member back into the heating furnace, effluent heat from the exhaust port to out of the heating furnace can be reduced, and energy consumed by the heating furnace (fuel consumption) can be reduced.
Further, since the flow of the exhaust gas is not hindered even with the fabric member installed in the exhaust port, the flow of gas inside the heating furnace can be kept in the same way without the fabric member in the exhaust port, while it is not likely that a pressure in the furnace increases. Therefore, the device can be readily applied to an existing heating furnace.

In the device according to the second aspect of the present invention, if two of the fabric members are used and cross at one point when viewed in plan to radially form the assembly, and the crossing angle between the fabric members is 10 to 90 degrees, the flow of the exhaust gas is not hindered even with the two fabric members used, while the fabric members can be in contact with the exhaust gas sufficiently.

In the device according to the second aspect of the present invention, if three or more of the fabric members are used and cross at one point when viewed in plan to radially form the assembly, and all of crossing angles between the adjacent fabric members are equally 5 degrees or more, the exhaust gas can pass between the fabric members uniformly, thus the fabric members can be efficiently heated by heat of the exhaust gas. Thereby, radiant heat from the heated fabric members can be efficiently put back into the heating furnace.

In the device according to the second aspect of the present invention, if the assembly is formed by three or more of the fabric members, and the fabric members cross at two or more points when viewed in plan to divide the inside of the exhaust port into a plurality of the branch passages along the flow of the exhaust gas passing inside the exhaust port, heat of the exhaust gas passing inside the exhaust port can be used efficiently.
If the assembly includes (a) the first fabric member group including two of the fabric members disposed in parallel at a distance of 5 mm or more and (b) one of the fabric member crossing the first fabric member group at the crossing angle of 5 degrees or more, the three fabric members can be efficiently heated by the exhaust gas passing inside the exhaust port. Thereby, radiant heat from the heated fabric members can be efficiently put back into the heating furnace.
Also, if the assembly includes (a) the first fabric member group including two or more of the fabric members disposed in parallel at the distance of 5 mm or more and (b) the second fabric member group including two or more of the fabric members disposed in parallel at the distance of 5 mm or more, and the fabric members of the first and second fabric member groups cross at the crossing angle of 5 degrees or more, the fabric members can be efficiently heated by the exhaust gas passing inside the exhaust port. Thereby, radiant heat from the heated fabric members can be efficiently put back into the heating furnace.

In the device according to the second aspect of the present invention, if the both ends in width directions of the fabric members are in contact with the inner wall of the exhaust port, the exhaust gas flows between the fabric members without fail, thus the fabric members can be efficiently heated.

In the device according to the second aspect of the present invention, the fabric member is made of the woven fabric having the thickness of 0.2 to 10 mm and the open area ratio of 30% or less or the non-woven fabric having the thickness of 1 to 10 mm and the void volume fraction of 50 to 97%. Therefore, the fabric member can be heated more efficiently and uniformly.
Further, if the fabric member is formed from the laminated fabric material made by laminating at least one of the woven fabric having the thickness of 0.2 to 10 mm and the open area ratio of 30% or less and the non-woven fabric having the thickness of 1 to 10 mm and the void volume fraction of 50 to 97%, a variety of the fabric members having different thicknesses can be easily made by changing the number of the woven fabrics and the non-woven fabrics.
Here, if the woven fabric is one of the plain-woven fabric, the satin-woven fabric, the twill-woven fabric, the three-dimensional woven fabric, and the multiaxial fabric, the fabric member suitable for the purpose can be prepared by selecting a kind of the woven fabric.

In the device according to the second aspect of the present invention, if the supporting member includes the cylindrical body having slits in which the fabric members are mounted and the fixing means fixing the cylindrical body to the inner wall of the exhaust port along the flow of the exhaust gas, the fabric members can be easily installed in the exhaust port along the flow of the exhaust gas passing inside the exhaust port.

In the device according to the second aspect of the present invention, if the cylindrical body includes one of the high heat-resistant oxide and the high heat-resistant non-oxide, the cylindrical body can be stably used at a high temperature for a long period of time.
Also, if the cylindrical body includes the high heat-resistant non-oxide and the coating layer of a heat-resistant oxide is formed on the surface of the cylindrical body, the cylindrical body can be stably used at a high temperature for a long period of time even if a temperature in the heating furnace changes.

In the device according to the second aspect of the present invention, if the fixing means is located on the exhaust gas inlet side of the cylindrical body, and includes at least one heat-resistant fastening member whose end on a radially inward side of the cylindrical body is in contact with or fixed to the cylindrical body and whose end on a radially outward side of the cylindrical body is fixed into the inner wall of the exhaust port, the cylindrical body can be easily installed in the exhaust port.
Here, if the fastening member is the headed bolt whose tip is screwed into the inner wall of the exhaust port, the cylindrical body can be easily mounted in and removed from the exhaust port.
Further, if the fastening member includes the high heat-resistant non-oxide and the coating layer of the heat-resistant oxide is formed on the surface of the fastening member, the fastening member can be stably used at a high temperature for a long period of time even if a temperature in the heating furnace changes.

In the device according to the second aspect of the present invention, the fixing means includes at least one second fastening member which penetrates the exhaust gas outlet side of the cylindrical body disposed in the exhaust port with the gap between the inner wall of the exhaust port and both ends of which are fixed into the inner wall of the exhaust port. In this case, the axial direction of the cylindrical body installed in the exhaust port can be easily adjusted and directed along the axial direction of the exhaust port.
Here, if the second fastening member includes the ceramic bolt and the ceramic nuts threadedly engaged with the ceramic bolt, the cylindrical body can be easily positioned and fixed by the ceramic nuts.
Also, if the second fastening member includes the high heat-resistant non-oxide, and the coating layer of the heat-resistant oxide is formed on the surface of the second fastening member, the second fastening member can be stably used at a high temperature for a long period of time even if a temperature in the heating furnace changes.

In the device according to the second aspect of the present invention, the fixing means includes the filler made by mixing the heat-resistant inorganic adhesive agent into the heat-resistant strip-shaped fabric sheet, and the filler is wrapped around the outer periphery of the cylindrical body to fill the gap between the cylindrical body and the exhaust port when the cylindrical body is inserted into the exhaust port. In this case, it is no longer necessary to use the cylindrical body having an outer dimension in accordance with an inner dimension of the exhaust port, thus the device can be readily installed in the exhaust port of an existing heating furnace.
Further, if the filler is provided on at least one of the exhaust gas inlet side and the exhaust gas outlet side of the cylindrical body, the cylindrical body can be fixed further firmly to the inside of the exhaust port.
Here, if the strip-shaped fabric sheet is composed of the woven fabric having the thickness of 0.2 to 10 mm and the open area ratio of 30% or less or the non-woven fabric having the thickness of 1 to 10 mm and the void volume fraction of 50 to 97%, the heat-resistant inorganic adhesive agent can be easily mixed into the strip-shaped fabric sheet, while the thickness of the filler can be easily adjusted by changing the number of wrapping of the strip-shaped fabric sheet around the outer periphery of the cylindrical body.
Also, if the heat-resistant inorganic adhesive agent is made of alumina, it is possible to maintain a stable adhesive strength at a high temperature, thus the cylindrical body can be firmly fixed to the inside of the exhaust port by the filler.

In the device according to the second aspect of the present invention, if the fabric member is formed by the inorganic fiber or the composite inorganic fiber having the multi-layered structure including the inner layer and the outer layer, it is possible to adjust a life and a cost of the fabric member depending on a usage environment.

In the device according to the second aspect of the present invention, the fabric member is composed of the composite inorganic fiber, and where the first group includes the following elements: Al, Ti, Cr, Fe, Si, Co, Ni, Cu, Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os, the outer layer of the composite inorganic fiber is composed of the material A consisting of one of the following: (1) the oxide of one element selected from the first group; (2) the complex oxide of two or more elements selected from the first group; (3) the oxide solid solution of two or more elements selected from the first group; (4) the oxide and the complex oxide; (5) the oxide and the oxide solid solution; (6) the complex oxide and the oxide solid solution; and (7) the oxide, the complex oxide, and the oxide solid solution, a value of a thermal expansion coefficient of the inorganic substance forming the outer layer is within a range of ±10% of a value of a thermal expansion coefficient of the inorganic substance forming the inner layer, and a thickness of the outer layer is 0.2 to 10 µm. In this case, it is possible to prevent the outer layer from coming off of the inner layer even if a temperature of the composite inorganic fiber is changed.
Here, where the second group includes the following elements: Y, Yb, Er, Ho, and Dy; a third group includes the following elements: Y, Yb, Er, Ho, Dy, Gd, Sm, Nd, and Lu; at least one of the elements selected from the second group is QE; and at least one of the elements selected from the third group is RE, and the oxide solid solution consists of at least one of the following general formulae: QE₂Si₂O₇, QESiO₅, RE₃Al₅O₁₂, and REAlO₃. In this case, heat resistance and corrosion resistance of the oxide solid solution can be enhanced.

In the device according to the second aspect of the present invention, if the inner layer is composed of one of the following: (1) the inorganic substance containing Si, C, O, and M1, where M1 is the metal component selected from Ti, Zr, and Al; (2) the aggregate of crystalline ultrafine particles and the amorphous inorganic substance, where the crystalline ultrafine particles have the particle sizes of 700 nm or less and contain (i) β-SiC, (ii) M2C, and (iii) at least one of the solid solution of β-SiC and M2C and M2C₁₋ₓ (0<x<1), M1 is the metal component selected from Ti, Zr, and A1, M2 is the metal component selected from Ti and Zr, M2C is the carbide of M2, and the amorphous inorganic substance contains Si, C, O, and M1 and exists between the crystalline ultrafine particles; (3) the inorganic substance containing Si, C, and O; (4) the aggregate of crystalline ultrafine particles of β-SiC having the particle sizes of 700 nm or less and the amorphous inorganic substance containing Si, C, and O and existing between the crystalline ultrafine particles; and (5) the crystalline inorganic substance consisting of microcrystals of β-SiC. In this case, specific heat of the fabric member is low, and thus the temperature fluctuation of the fabric member can be readily followed. When the temperature of the fabric members is high, a reflection efficiency of the radiant heat can be enhanced.

In the device according to the second aspect of the present invention, the fabric member is composed of the inorganic fiber composed of one of the following: (1) the inorganic substance containing Si, C, O, and M1, where M1 is the metal component selected from Ti, Zr, and Al; (2) the inorganic substance containing Si, C, and O; and (3) the crystalline inorganic substance consisting of microcrystals of β-SiC. In this case, specific heat of the fabric member is low, and thus the temperature fluctuation of the fabric member can be readily followed. When the temperature of the fabric members is high, a reflection efficiency of the radiant heat can be enhanced.
Further, if the inorganic fiber is composed of the amorphous inorganic substance consisting of Al, Si, and O, the fabric member can be used in an oxidizing atmosphere.

In the device according to the second aspect of the present invention, if the strip-shaped fabric sheet is formed by an inorganic fiber or a composite inorganic fiber having a multi-layered structure including an inner layer and an outer layer, it is possible to adjust [select] a life and a cost of the filler depending on a usage environment.

### BRIEF DESCRIPTION OF DRAWINGS

FIG. 1 is an explanatory diagram showing a thermal efficiency improvement device for a heating furnace according to a first embodiment of the present invention.
FIG. 2 is an explanatory diagram showing an assembly formed by fabric members of the device.
FIGs. 3(A), 3(B), 3(C) are explanatory diagrams showing a method for preparing the assembly.
FIG. 4 is an explanatory diagram showing a cylinder of the device.
FIG. 5 is an explanatory diagram showing the cylinder with the assembly attached.
FIG. 6 is an explanatory diagram showing a thermal efficiency improvement device for a heating furnace according to a second embodiment of the present invention.
FIG. 7 is an explanatory diagram showing a thermal efficiency improvement device for a heating furnace according to a third embodiment of the present invention.
FIG. 8 is an explanatory diagram showing an assembly formed by fabric members of the device.
FIGs. 9(A), 9(B) are explanatory diagrams showing a method for preparing the assembly.
FIG. 10 is an explanatory diagram showing a cylinder of the device.
FIG. 11 is an explanatory diagram showing the cylinder with the assembly attached.
FIG. 12 is an explanatory diagram showing a fabric member used for an assembly according to a modification.
FIG. 13 is an explanatory diagram showing a method for attaching the assembly according to the modification.
FIG. 14 is an explanatory diagram showing a method for attaching an assembly according to another modification.
FIG. 15 is an explanatory diagram showing an electrical furnace in which a thermal efficiency improvement device for a heating furnace according to a first experimental example is installed.
FIG. 16 is an explanatory diagram showing an assembly used for a thermal efficiency improvement device for a heating furnace according to a second experimental example.
FIG. 17 is an explanatory diagram showing a cylinder used for the device for improving thermal efficiency of the heating furnace according to the second experimental example.
FIG. 18 is an explanatory diagram showing the device for improving thermal efficiency of the heating furnace according to the second experimental example.
FIG. 19 is an explanatory diagram showing an assembly used for a thermal efficiency improvement device for a heating furnace according to a fifth experimental example.
FIG. 20 is an explanatory diagram showing a cylinder used for the device for improving thermal efficiency of the heating furnace according to the fifth experimental example.
FIG. 21 is an explanatory diagram showing the device for improving thermal efficiency of the heating furnace according to the fifth experimental example.

### DESCRIPTION OF EMBODIMENTS

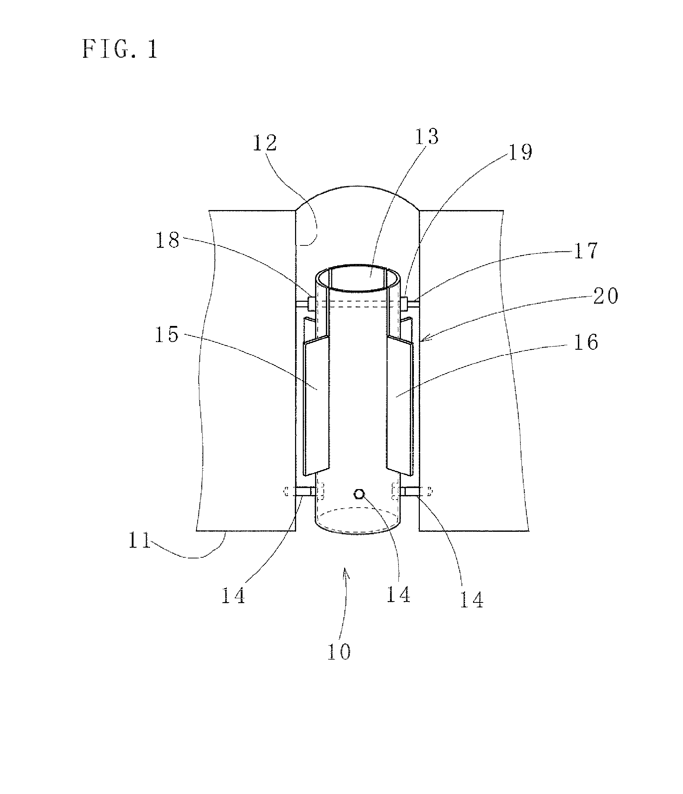

Referring to the accompanying drawings, embodiments of the present invention will be described for a better understanding of the invention.
As shown in FIG. 1, a device for improving thermal efficiency of a heating furnace (hereinafter simply referred to as a thermal efficiency improvement device) 10 according to a first embodiment of the present invention is installed, for example, in an exhaust port 12 circular in cross-section provided by vertically penetrating a ceiling 11 of the heating furnace. The device 10 has a function to reduce effluent heat from the exhaust port 12 to the outside (i.e., to out of the heating device).

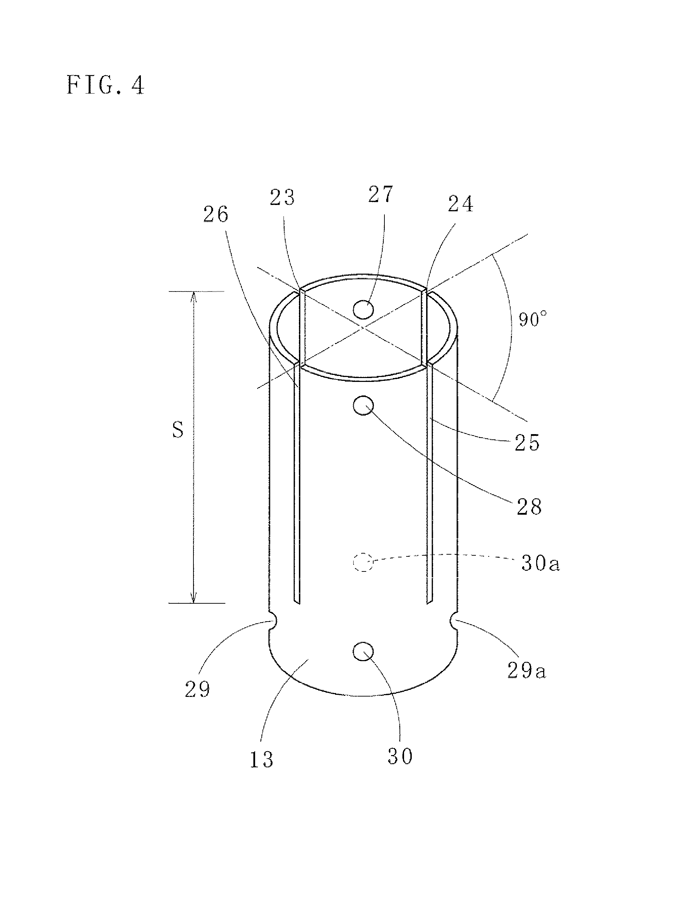

The device 10 includes, in the exhaust port 12, two heat-resistant fabric members 15, 16 disposed along a flow of exhaust gas passing inside the exhaust port 12 and heated by the exhaust gas, a heat-resistant cylinder 13 (an example of a cylindrical body composing a supporting member) including slits 23, 24, 25, 26 (see FIG. 4) into which the fabric members 15, 16 are placed, and a plurality (four in FIG. 1) of heat-resistant headed bolts 14 (a part of fastening members as a fixing means composing the supporting member). The headed bolts 14 are provided on an exhaust gas inlet side of the cylinder 13, ends of the headed bolts 14 on radially inward side of the cylinder 13 are fixed to the cylinder 13, ends of the headed bolts 14 on radially outward side of the cylinder 13 are screwed into an inner wall of the exhaust port 12, and thereby the headed bolts 14 fix the cylinder 13 to the inner wall of the exhaust port 12 along the flow of the exhaust gas. Further, the device 10 includes a heat-resistant ceramic bolt 17 and ceramic nuts 18, 19 (an example of a second fastening member provided for the fixing means composing the supporting member) threadedly engaged with the ceramic bolt 17. The ceramic bolt 17 penetrates an exhaust gas outlet side of the cylinder 13, while the cylinder 13 is disposed in the exhaust port 12 with a gap between the inner wall of the exhaust port 12. Both ends of the ceramic bolt 17 are fixed into the inner wall of the exhaust port 12. Hereinafter, detailed descriptions are given.

The cylinder 13 is made of one of a high heat-resistant oxide (e.g., alumina) and a high heat-resistant non-oxide (e.g., silicon carbide, silicon nitride, sialon). Therefore, deformation and breakage of the cylinder 13 at a high temperature is prevented, and the cylinder 13 can be used stably for a long period of time. In a case where a temperature in the heating furnace changes during operation, the cylinder 13 made of the high heat-resistant non-oxide can further prevent the breakage thereof due to temperature change. Here, since a surface of the cylinder 13 formed by the high heat-resistant non-oxide is gradually oxidized in an oxidizing atmosphere at a high temperature, a slurry of a heat-resistant oxide, e.g., alumina and zirconia, is applied to the surface to form a coating layer to prevent the surface from being oxidized. Thereby, degradation of a high-temperature property (e.g., strength and thermal shock resistance) of the cylinder 13 can be prevented, and the cylinder 13 can be used stably for a long period of time.

The headed bolt 14 formed by ceramic (as well as the ceramic bolt 17 and the ceramic nuts 18, 19) is made of one of a high heat-resistant oxide (e.g., alumina) and a high heat-resistant non-oxide (e.g., silicon carbide, silicon nitride, sialon). Therefore, deformation and breakage of the headed bolt 14 at a high temperature is prevented, and the headed bolt 14 can be used stably for a long period of time. In a case where a temperature in the heating furnace changes during operation, the headed bolt 14 formed by the high heat-resistant non-oxide can further prevent the breakage thereof due to temperature change. Here, since a surface of the headed bolt 14 formed by the high heat-resistant non-oxide is gradually oxidized in an oxidizing atmosphere at a high temperature, a slurry of a heat-resistant oxide, e.g., alumina and zirconia, is applied to the surface to form a coating layer to prevent the surface from being oxidized. Thereby, degradation of a high-temperature property (e.g., strength and thermal shock resistance) of the headed bolt 14 can be prevented, and the headed bolt 14 can be used stably for a long period of time. Also, the ceramic bolt 17 is provided at circumferentially-facing lateral surfaces on the exhaust gas outlet side of the cylinder 13. The ceramic bolt 17 penetrates the cylinder 13, and the both ends of the ceramic bolt 17 press an inner peripheral surface of the exhaust port 12. Therefore, positioning and fixing of the cylinder 13 in the exhaust port 12 can further be reinforced. Here, the ceramic bolt 17 is fixed to the cylinder 13 by pressing the cylinder 13 from both sides by the ceramic nuts 18, 19 screwed from the both ends of the ceramic bolt 17.

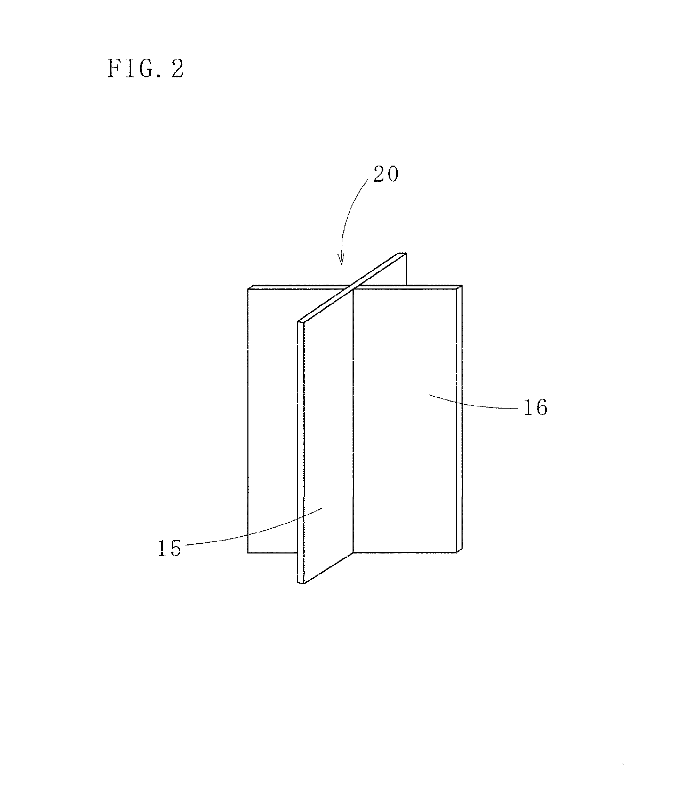

As shown in FIG. 2, the fabric members 15, 16 cross at one point when viewed in plan (at a center in width directions of the fabric members 15, 16) at a crossing angle of 10 to 90 degrees. In this embodiment, the fabric members 15, 16 cross at a crossing angle of 90 degrees to form an assembly 20 in a radial fashion. The assembly 20 is inserted in the cylinder 13 with a longitudinal direction of the assembly 20 (longitudinal directions of the fabric members 15, 16) directed along an axial direction of the cylinder 13. When the cylinder 13 with the assembly 20 inserted therein is installed to the exhaust port 12, both ends in width directions of the fabric members 15, 16 projected out of the cylinder 13 are in contact with the inner wall of the exhaust port 12. Thereby, the exhaust gas flows along lateral sides of the fabric members 15, 16 and the cylinder 13.

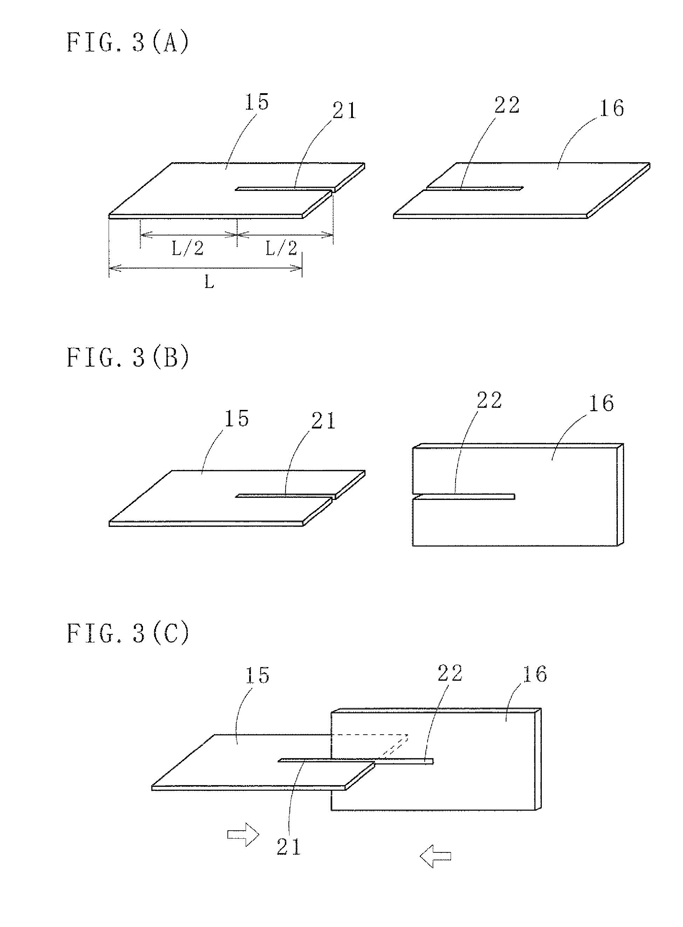

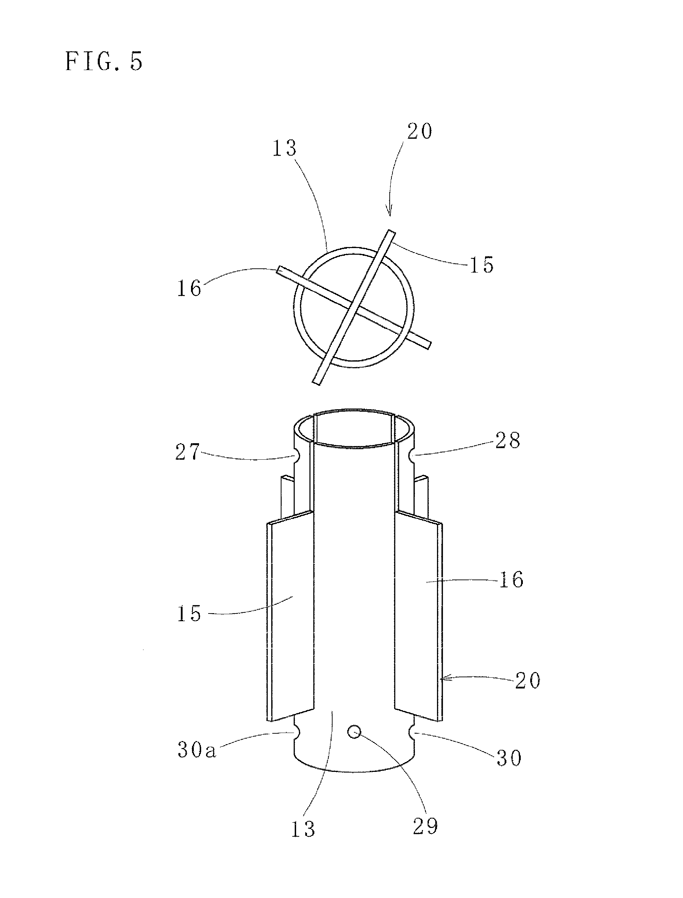

The assembly 20 is formed as follows: as shown in FIG. 3(A), cuttings 21, 22 having lengths half of lengths L of the fabric members 15, 16 are formed at the centers in the width directions of the fabric members 15, 16 along the longitudinal directions; as shown in FIG. 3(B), the fabric members 15, 16 are disposed so that the cuttings 21, 22 face each other on the same axis and the fabric members 15, 16 are orthogonal to each other; and as shown in FIG. 3(C), the cuttings 21, 22 are inserted into the facing cuttings 22, 21 therealong, respectively, to combine the fabric members 15, 16. As shown in FIG. 4, at quarter positions in a circumferential direction on a base end on the exhaust gas outlet side of the cylinder 13, slits 23, 24, 25, 26 having lengths S longer than the lengths L of the fabric members 15, 16 are formed along the axial direction of the cylinder 13. The assembly 20 is inserted into the cylinder 13 so that both ends along the longitudinal directions of the fabric members 15, 16 of the assembly 20 are inserted through the slits 23 to 26. Thereby, as shown in FIG. 5, the assembly 20 can be disposed in the cylinder 13 with the crossing angle of the fabric members 15, 16 kept at 90 degrees. In FIG. 4, reference numerals 27, 28 denote mounting holes through which the ceramic bolt 17 is inserted, and reference numerals 29, 29a, 30, 30a denote mounting holes through which the headed bolts 14 are inserted.

In the first embodiment, the assembly 20 is formed by the fabric members 15, 16, but an assembly can be formed by crossing three or more fabric members at one point when viewed in plan (at centers in width directions of the fabric members) to make all crossing angles between the adjacent fabric members are equal. Here, each of the crossing angles between the adjacent fabric members is 5 degrees or more. By setting the crossing angle 5 degrees or more, resistance caused while the exhaust gas passes between the fabric members can be reduced without preventing the flow of the exhaust gas. Here, an upper limit of the crossing angle is 60 degrees if the assembly includes three of the fabric members.

The fabric members 15, 16 are made by cutting a fabric material made of a woven fabric having a thickness of 0.2 to 10 mm and an open area ratio of 30% or less or of a non-woven fabric having a thickness of 1 to 10 mm and a void volume fraction of 50 to 97%. Here, the woven fabric is one of a plain-woven fabric, a satin-woven fabric, a twill-woven fabric, a three-dimensional woven fabric, and a multiaxial fabric. By selecting a kind of the woven fabric, a fabric member suitable for a purpose can be prepared.
Alternatively, the fabric member can be formed from a laminated fabric material made by laminating at least one of a woven fabric having a thickness of 0.2 to 10 mm and an open area ratio of 30% or less and a non-woven fabric having a thickness of 1 to 10 mm and a void volume fraction of 50 to 97%.

The fabric members 15, 16 are made by cutting a fabric material composed of a composite inorganic fiber having a multi-layered structure including an inner layer and an outer layer. The inner layer is composed of one of the following: (1) an inorganic substance containing Si, C, O, and M l, where M1 is a metal component selected from Ti, Zr, and Al; (2) an aggregate of crystalline ultrafine particles and an amorphous inorganic substance, where the crystalline ultrafine particles have particle sizes of 700 nm or less and contain (mainly include) (i) β-SiC, (ii) M2C, and (iii) at least one of a solid solution of β-SiC and M2C and M2C₁₋ₓ (0<x<1), M1 is the metal component selected from Ti, Zr, and Al, M2 is a metal component selected from Ti and Zr, M2C is a carbide of M2, and the amorphous inorganic substance contains Si, C, O, and M1 and exists between the crystalline ultrafine particles; (3) an inorganic substance containing Si, C, and O; (4) an aggregate of crystalline ultrafine particles of β-SiC having particle sizes of 700 nm or less and an amorphous inorganic substance containing Si, C, and O and existing between the crystalline ultrafine particles; and (5) a crystalline inorganic substance consisting of microcrystals of β-SiC. In other words, the inner layer is composed of a silicon carbide material.

Further, where a first group includes the following elements: Al, Ti, Cr, Fe, Si, Co, Ni, Cu, Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os, the outer layer is composed of a material A consisting of one of the following: (1) an oxide of one element selected from the first group; (2) a complex oxide (composite oxide) of two or more elements selected from the first group; (3) an oxide solid solution of two or more elements selected from the first group; (4) the oxide and the complex oxide; (5) the oxide and the oxide solid solution; (6) the complex oxide and the oxide solid solution; and (7) the oxide, the complex oxide, and the oxide solid solution. A value of a thermal expansion coefficient of the inorganic substance forming the outer layer is within a range of ±10% of a value of a thermal expansion coefficient of the inorganic substance forming the inner layer, and a thickness of the outer layer is 0.2 to 10 µm. Thereby, it is possible to prevent the outer layer from coming off of the inner layer even if a temperature of the composite inorganic fiber is changed.

Moreover, where a second group includes the following elements: Y, Yb, Er, Ho, and Dy; a third group includes the following elements: Y, Yb, Er, Ho, Dy, Gd, Sm, Nd, and Lu; at least one of the elements selected from the second group is QE; and at least one of the elements selected from the third group is RE, the oxide solid solution consists of at least one of the following general formulae: QE₂Si₂O₇, QESiO₅, RE₃Al₅O₁₂, and REAlO₃. Thereby, heat resistance and corrosion resistance of the oxide solid solution (i.e., the outer layer) are enhanced.

The fabric members 15, 16 can be made by providing the outer layer on an external surface of the inorganic fiber composing a heat-resistant base material (made by cutting the fabric material formed from the woven fabric or the non-woven fabric composed of a heat-resistant inorganic fiber), which is used as a base of the fabric members 15, 16, and thereby changing the inorganic fiber to the composite inorganic fiber having the inner layer and the outer layer. Here, the woven fabric composed of the inorganic fiber has a thickness of 0.2 to 10 mm and an open area ratio of 30% or less, and the non-woven fabric composed of the inorganic fiber has a thickness of 1 to 10 mm and a void volume fraction of 50 to 97%. Hereinafter, a method for preparing the fabric members 15, 16 from the base material will be described.

The inorganic fiber is composed of at least one of the following: (1) an inorganic substance containing Si, C, O, and M1, where M1 is a metal component selected from Ti, Zr, and Al; (2) an inorganic substance containing Si, C, and O; and (3) a crystalline inorganic substance consisting of microcrystals of β-SiC. Here, the inorganic substance containing Si, C, O, and M1 contains an aggregate of crystalline ultrafine particles and an amorphous inorganic substance, where the crystalline ultrafine particles have particle sizes of 700 nm or less and consist of β-SiC, M2C, and at least one of a solid solution of β-SiC and M2C and M2C₁₋ₓ (0<x<1), M1 is the metal component selected from Ti, Zr, and Al, M2 is a metal component selected from Ti and Zr, M2C is a carbide of M2, and the amorphous inorganic substance contains Si, C, O, and M1 and exists between the crystalline ultrafine particles. Further, the inorganic substance containing Si, C, and O contains an aggregate of crystalline ultrafine particles of β-SiC having particle sizes of 700 nm or less and an amorphous inorganic substance containing Si, C, and O and existing between the crystalline ultrafine particles. Therefore, when the inorganic fiber is composed of the inorganic substance (1) to (3), the inorganic fiber has the same composition (silicon carbide material) as the inner layer of the composite inorganic fiber. Thus, the fabric member composed of the composite inorganic fiber formed by providing the outer layer on the external surface of the inorganic fiber has the same characteristics (property) as the fabric members 15, 16.

The method for preparing the fabric members 15, 16 includes the following four processes: a first process of making the base material by cutting the fabric material formed from the woven fabric or the non-woven fabric composed of the inorganic fiber; a second process of processing the base material by immersing the base material in a dispersion solution in which the powdered material A is dispersed in water, an organic solvent, or a mixed solvent of water and an organic solvent, and further by setting the base material to a negative electrode side and applying a direct-current voltage of 50 to 150 V for 2 to 10 minutes, thereby attaching the powdered material A by electrophoresis to a surface of the inorganic fiber composing the base material; a third process of taking out the processed base material from the dispersion solution, and drying the base material to remove water or the organic solvent; and a fourth process of changing the inorganic fiber into the composite inorganic fiber having the inner layer and the outer layer by heating the dried base material at 1300 to 1700°C in an inert gas atmosphere for 0.2 to 2 hours to fix the powdered material A onto the inorganic fiber.

The base material having a square shape or a rectangular shape of a predetermine size is made by cutting the fabric material formed from the woven fabric or the non-woven fabric composed of the inorganic fiber. Here, if a chemical fiber (e.g., rayon fiber) is contained in or if a sizing agent is applied to the fabric material used to make the base material, the base material is heated at 800 to 1200°C for 0.5 to 5 hours in an inert gas atmosphere (nitrogen gas atmosphere, or preferably, argon gas atmosphere). Thereby, the chemical fiber can be completely dissolved and removed, or a part of the chemical fiber can be dissolved and the other part can be carbonized, and the sizing agent can be completely removed. As a result, the base material becomes completely inorganic. (The first process is described hereinabove.)

The completely inorganic base material is immersed in a tub containing the dispersion solution in which the powdered material A is dispersed in water, the organic solvent, or the mixed solvent of water and the organic solvent. Here, the organic solvent is, for example, one of acetone, ethanol, and normal heptane. Also, where the first group includes the following elements: Al, Ti, Cr, Fe, Si, Co, Ni, Cu, Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os, the material A consists of one of the following: (1) an oxide of one element selected from the first group; (2) a complex oxide (composite oxide) of two or more elements selected from the first group; (3) an oxide solid solution of two or more elements selected from the first group; (4) the oxide and the complex oxide; (5) the oxide and the oxide solid solution; (6) the complex oxide and the oxide solid solution; and (7) the oxide, the complex oxide, and the oxide solid solution. Further, to enhance heat resistance and corrosion resistance of the oxide solid solution, the oxide solid solution is composed of at least one of the following general formulae: QE₂Si₂O₇, QESiO₅, RE₃Al₅O₁₂, and REAlO₃, where the second group includes the following elements: Y, Yb, Er, Ho, and Dy; the third group includes the following elements: Y, Yb, Er, Ho, Dy, Gd, Sm, Nd, and Lu; at least one of the elements selected from the second group is QE; and at least one of the elements selected from the third group is RE.

The base material is processed by setting the base material to the negative electrode side and applying the direct-current voltage of 50 to 150 V from a stabilized DC power supply for 2 to 10 minutes, thereby attaching the powdered material A by electrophoresis to the external surface of the inorganic fiber composing the base material. Here, in the tub, cathode electrodes made of, for example, C/C composite are disposed oppositely at a distance. The base material is held between (sandwiched by) two stainless-steel wire nets, which work as anode electrodes, and then disposed between the cathode electrodes. (The second process is described hereinabove.)

After the base material is processed, the processed base material is taken out from the dispersion solution to drain off the dispersion solution, and the base material is air-dried for 1 to 4 hours to blow away and remove most of water or the organic solvent. Next, the base material is dried by hot air in an air atmosphere at 40 to 80°C for 3 to 10 hours to completely remove remaining water or the organic solvent. (The third process is described hereinabove.)

After the processed base material is dried, the processed base material is heated at 1300 to 1700°C for 0.2 to 2 hours under an inert gas such as argon gas or in the inert gas atmosphere with a slight pressure of 0.2 to 1 MPa. Thereby, the powdered material attached on the external surface of the inorganic fiber is sintered and fixed to the inorganic fiber, and the inorganic fiber changes into the composite inorganic fiber having the inner layer and the outer layer. (The fourth process is described hereinabove.) With these processes, the fabric members 15, 16 are manufactured. Here, the outer layer is made of the material A, and the inner layer is made of the inorganic substance composing the inorganic fiber.

Hereinafter, a thermal efficiency improvement method for a heating furnace by using the thermal efficiency improvement device 10 according to the first embodiment of the present invention will be described.
By installing the device 10 for improving thermal efficiency of the heating furnace in the exhaust port 12 of the heating furnace, exhaust gas passes inside the cylinder 13 of the device 10 and through a gap between an outer periphery of the cylinder 13 and an inner periphery of the exhaust port 12, and then is emitted to the outside of the heating furnace. Here, the assembly 20 formed in a radial fashion by crossing the fabric members 15, 16 at one point when viewed in plan is inserted in the cylinder 13 with the longitudinal direction of the assembly 20 (longitudinal directions of the fabric members 15, 16) directed along the axial direction of the cylinder 13 (in a direction of a flow of the exhaust gas). Also, in the gap between the outer periphery of the cylinder 13 and the inner periphery of the exhaust port 12, the both ends in the width directions of the fabric members 15, 16 projected out of the cylinder 13 are disposed with the longitudinal directions of the fabric members 15, 16 directed along the axial direction of the exhaust port 12 (the axial direction of the cylinder 13). Further, the both ends in the width directions of the fabric members 15, 16 are in contact with the inner wall of the exhaust port 12. Thereby, the exhaust gas can certainly pass along the fabric members 15, 16.

The exhaust gas flows along the lateral sides of the fabric members 15, 16 and the cylinder 13, and thereby the fabric members 15, 16 are heated efficiently by the exhaust gas. The heated fabric members 15, 16 increase a temperature of an exhaust gas inlet end of the exhaust port 12 (i.e., an end of the exhaust port 12 on a side of the heating furnace), and radiant heat emitted from the heated fabric members 15, 16 is brought into the heating furnace, thus effluent heat from the exhaust port 12 to the outside can be reduced. Further, it is possible to decrease a temperature inside the exhaust port 12 and to decrease a temperature of the exhaust gas emitted from an exit end of the exhaust port 12 by 450 to 550°C. Therefore, energy consumed by the heating furnace (fuel consumption) can be reduced. (Likewise in the other embodiments of the present invention.)
In addition, since the exhaust gas flows along the lateral sides of the fabric members 15, 16 and the cylinder 13, the flow of the exhaust gas is not hindered even if the cylinder 13 and the fabric members 15, 16 are mounted in the exhaust port 12. Thus, it is possible to keep a flow of gas inside the heating furnace in the same way as without the fabric members mounted in the exhaust port 12, while it is not likely that a pressure in the furnace increases. The device 10 can therefore be readily applied to an existing heating furnace. Furthermore, since the device 10 can be mounted to or removed from the exhaust port 12 by mounting the cylinder 13 to or removing the cylinder 13 from the exhaust port 12, maintenance of the device 10 is simplified.

Since the fabric members 15, 16 forming the assembly 20 cross at the crossing angle of 10 to 90 degrees (e.g., 90 degrees), the exhaust gas can flow uniformly through insides and outsides of the fabric members 15, 16, and the fabric members 15, 16 can be efficiently heated by heat of the exhaust gas. Thus, the radiant heat from the heated fabric members 15, 16 can be efficiently put back into the heating furnace.

If the assembly is made of three or more fabric members, the fabric members cross at two or more points when viewed in plan, and the inside of the exhaust port 12 is divided into a plurality of branch passages along the flow of the exhaust gas passing inside the exhaust port 12. For example, the assembly may be composed of a first fabric member group including two fabric members disposed in parallel at a distance of 5 mm or more, and one fabric member crossing the fabric members of the first fabric member group at a crossing angle of 5 degrees or more and less than 90 degrees or at a crossing angle of 90 degrees. Alternatively, the assembly may be composed of the first fabric member group and a second fabric member group, both including two or more fabric members disposed in parallel at a distance of 5 mm or more, in a way that the fabric members of the first group and the fabric members of the second group cross at a crossing angle of 5 degrees or more and less than 90 degrees or at a crossing angle of 90 degrees. By using the assembly described above, it is also possible to efficiently heat the fabric members of the assembly by the exhaust gas passing inside the exhaust port, and to efficiently bring radiant heat from the heated fabric materials into the heating furnace.

The fabric members 15, 16 are made of the woven fabric having the thickness of 0.2 to 10 mm and the open area ratio of 30% or less or of the non-woven fabric having the thickness of 1 to 10 mm and the void volume fraction of 50 to 97%. Therefore, the exhaust gas can pass (penetrate) through the fabric members 15, 16, and heat the fabric members 15, 16 more efficiently and uniformly. If the fabric member is formed from the laminated fabric material made by laminating at least one of the woven fabric having the thickness of 0.2 to 10 mm and the open area ratio of 30% or less and the non-woven fabric having the thickness of 1 to 10 mm and the void volume fraction of 50 to 97%, a variety of the fabric members having different thicknesses can be easily made by changing the number of the woven fabrics and the non-woven fabrics. Here, by selecting a kind of the woven fabric from the plain-woven fabric, the satin-woven fabric, the twill-woven fabric, the three-dimensional woven fabric, and the multiaxial fabric, the fabric members 15, 16 suitable for a purpose (strength, rigidity, elasticity, thickness, length, cost, etc.) can be prepared.

If the fabric members 15, 16 are composed of a composite inorganic fiber having a multi-layered structure including an inner layer and an outer layer, and where a first group includes the following elements: Al, Ti, Cr, Fe, Si, Co, Ni, Cu, Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os, the outer layer is composed of a material A consisting of one of the following: (1) an oxide of one element selected from the first group; (2) a complex oxide (composite oxide) of two or more elements selected from the first group; (3) an oxide solid solution of two or more elements selected from the first group; (4) the oxide and the complex oxide; (5) the oxide and the oxide solid solution; (6) the complex oxide and the oxide solid solution; and (7) the oxide, the complex oxide, and the oxide solid solution, a value of a thermal expansion coefficient of the inorganic substance forming the outer layer is within a range of ± 10% of a value of a thermal expansion coefficient of the inorganic substance forming the inner layer, and a thickness of the outer layer is 0.2 to 10 µm, then it is possible to prevent the outer layer from coming off of the inner layer even with a temperature fluctuation of the fabric member. As a result, even when the composite inorganic fiber exists in a high-temperature oxidizing atmosphere, it is possible to prevent the inner layer from reacting with oxygen (oxidation of the inner layer). Therefore, property degradation due to a change in material properties of the inner layer (e.g., deterioration of strength and reduction of thermal emissivity) can be prevented.

Here, where a second group includes the following elements: Y, Yb, Er, Ho, and Dy; a third group includes the following elements: Y, Yb, Er, Ho, Dy, Gd, Sm, Nd, and Lu; at least one of the elements selected from the second group is QE; and at least one of the elements selected from the third group is RE, the oxide solid solution is composed of at least one of the following general formulae: QE₂Si₂O₇, QESiO₅, RE₃Al₅O₁₂, and REAlO₃. In this case, heat resistance and corrosion resistance of the oxide solid solution (i.e., the outer layer) can be enhanced. Thus, the change in material properties of the inner layer due to oxidation can be prevented, and stability of the composite inorganic fiber in the high-temperature oxidizing atmosphere can further be enhanced.

Further, the inner layer is composed of one of the following: (1) an inorganic substance containing Si, C, O, and M1, where M1 is a metal component selected from Ti, Zr, and Al; (2) an aggregate of crystalline ultrafine particles and an amorphous inorganic substance, where the crystalline ultrafine particles have particle sizes of 700 nm or less and contain (i) β-SiC, (ii) M2C, and (iii) at least one of a solid solution of βSiC and M2C and M2C₁₋ₓ (0<x<1), M1 is the metal component selected from Ti, Zr, and Al, M2 is a metal component selected from Ti and Zr, M2C is a carbide of M2, and the amorphous inorganic substance contains Si, C, O, and M1 and exists between the crystalline ultrafine particles; (3) an inorganic substance containing Si, C, and O; (4) an aggregate of crystalline ultrafine particles of β-SiC having particle sizes of 700 nm or less and an amorphous inorganic substance containing Si, C, and O and existing between the crystalline ultrafine particles; and (5) a crystalline inorganic substance consisting of microcrystals of β-SiC. In this case, specific heat of the fabric members 15, 16 is low, and thus the temperature fluctuation of the fabric members 15, 16 can be readily followed. When the temperature of the fabric members 15, 16 is high, a reflection efficiency of the radiant heat can be enhanced.

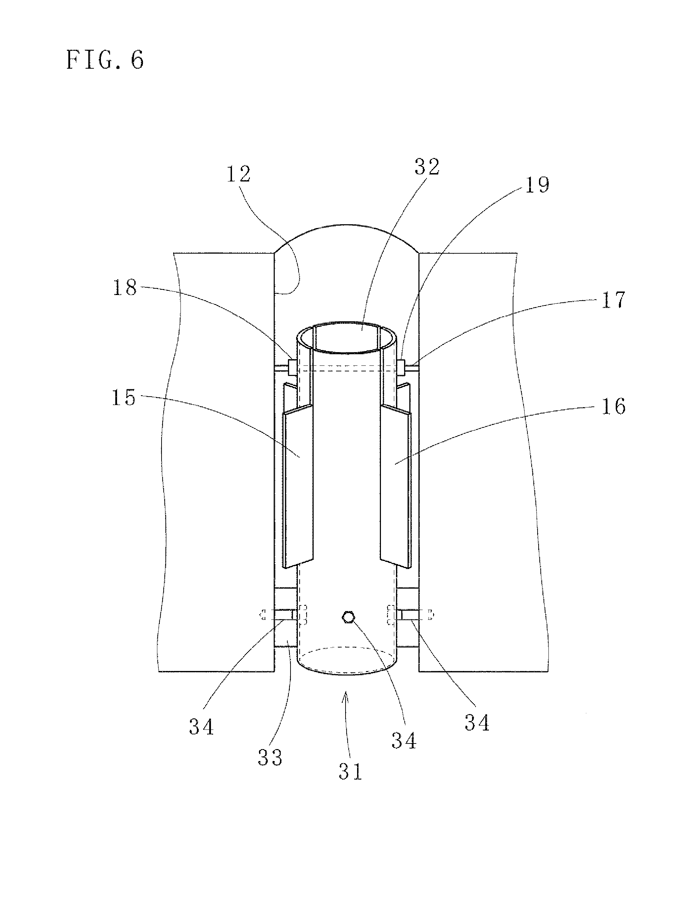

As shown in FIG. 6, unlike the device 10 according to the first embodiment, a device for improving thermal efficiency of a heating furnace (hereinafter simply referred to as a thermal efficiency improvement device) 31 according to a second embodiment of the present invention includes a filler 33 made by mixing an heat-resistant inorganic adhesive agent into a heat-resistant strip-shaped fabric sheet. To fix a cylinder 32 (an example of a cylindrical body composing a supporting member) inserted in the exhaust port 12 to an inner wall of the exhaust port 12, the filler 33 is used as a fixing means (together with the cylindrical body, composing the supporting member). The filler 33 is wrapped around an outer periphery of the cylinder 32 facing an inside of the heating furnace (an outer periphery on an exhaust gas inlet side of the cylinder 32) and is inserted into the exhaust port 12 to fill a gap between the cylinder 32 and the exhaust port 12. Here, the device 31 also includes a plurality (four in the second embodiment) of heat-resistant headed bolts 34 (a part of fastening members as the fixing means) penetrating the cylinder 32 and the filler 33 disposed outside of the cylinder 32 from an inside of the cylinder 32, tips of which are screwed into an inner periphery of the exhaust port 12. Hereunder, only the filler 33 will be described, and elements which are the same as those of the device 10 are numbered accordingly, and detailed descriptions of the elements will be omitted.
Also, descriptions of a thermal efficiency improvement method for a heating furnace using the device 31 (a method for reflecting radiant heat and shielding heat of the heating furnace) according to the second embodiment will be omitted because the method is the same as the thermal efficiency improvement method for the heating furnace using the device 10 according to the first embodiment.

The cylinder 32 and the headed bolt 34 can be composed in the same way as the cylinder 13 and the headed bolt 14 used in the device 10 according to the first embodiment.
The heat-resistant strip-shaped fabric sheet is composed of a woven fabric having a thickness of 0.2 to 10 mm and an open area ratio of 30% or less (one of a plain-woven fabric, a satin-woven fabric, a twill-woven fabric, a three-dimensional woven fabric, and a multiaxial fabric) or of a non-woven fabric having a thickness of 1 to 10 mm and a void volume fraction of 50 to 97%. Further, the strip-shaped fabric sheet is made of a composite inorganic fiber having a multi-layered structure including an inner layer and an outer layer (in the same way as the composite inorganic fiber forming the fabric members 15, 16 used in the device 10 in the first embodiment). The heat-resistant inorganic adhesive agent is made of alumina.

Here, the heat-resistant inorganic adhesive agent is mixed into the strip-shaped fabric sheet by, for example, applying the heat-resistant inorganic adhesive agent to each of top and bottom surfaces of the strip-shaped fabric sheet, and then pressing the heat-resistant inorganic adhesive agent by a roller. Since the filler 33 is formed by wrapping the strip-shaped fabric sheet around the outer periphery of the cylinder 32, a thickness of the filler 33 can be easily adjusted by changing the number of wrapping of the strip-shaped fabric sheet. Therefore, it is possible to make the thickness of the filler 33 suitable for a gap distance from the outer periphery of the cylinder 32 to the inner periphery of the exhaust port 12 in order to insert the cylinder 32 into the exhaust port 12, and it is also possible to readily provide the filler 33 having the thickness sufficient to fill the gap between the cylinder 32 and the exhaust port 12 outside the cylinder 32.

The strip-shaped fabric sheet composing the filler 33 has communicating holes, and the holes are filled with the heat-resistant inorganic adhesive agent, which is uncured. When the cylinder 32 with the filler 33 provided thereoutside is inserted, the filler 33 can be easily deformed in accordance with a shape of the gap between the outer periphery of the cylinder 32 and the inner periphery of the exhaust port 12, thus the gap can be securely filled. After the cylinder 32 is inserted together with the filler 33 in the exhaust port 12 and the heat-resistant inorganic adhesive agent in the holes of the strip-shaped fabric sheet is cured, the filler 33 can be fixed in a shape in accordance with the shape of the gap, and thus the gap can be securely filled. Further, when the cylinder 32 is inserted together with the filler 33 in the exhaust port 12, via the heat-resistant inorganic adhesive agent, the cylinder 32 and the filler 33, as well as the filler 33 and the inner periphery of the exhaust port 12 are bonded, and thus the cylinder 32 can be tightly fixed in the exhaust port 12. Here, a plurality of ceramic headed bolts 34 are provided on a lateral side of an end of the cylinder 32 (on the exhaust gas inlet side). Therefore, by pressing the inner periphery of the exhaust port 12 by the tips of the headed bolts 34, the cylinder 32 can be tightly fixed to the exhaust port 12.
Alternatively, the filler can be provided on an outer periphery of the cylinder 32 facing an outside of the heating furnace (outer periphery on an exhaust gas outlet side of the cylinder 32), or can be provided on each outer periphery of the cylinder 32 facing the inside and the outside of the heating furnace.

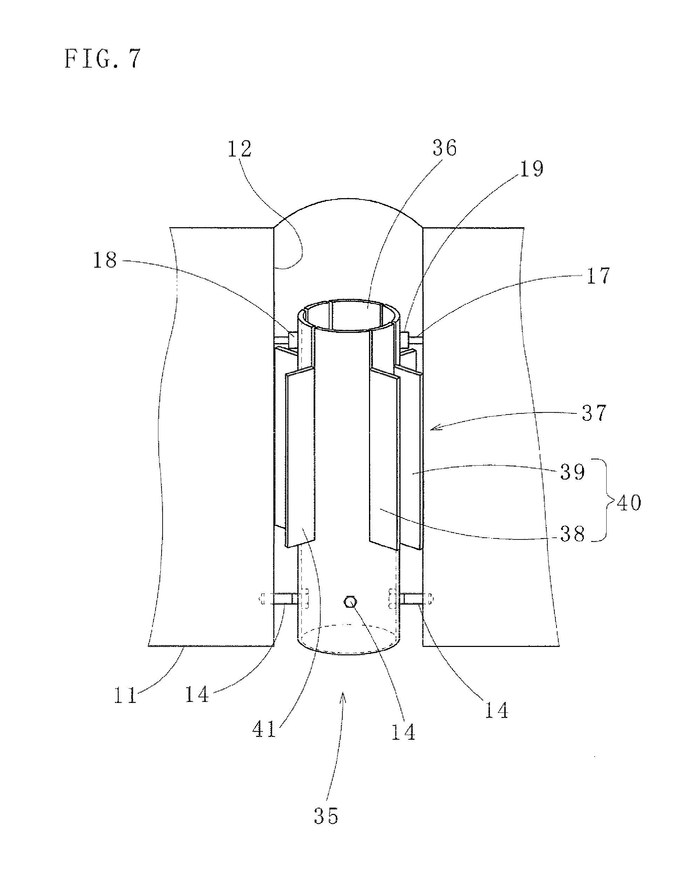

As shown in FIG. 7, unlike the device 10 according to the first embodiment, a device for improving thermal efficiency of a heating furnace (hereinafter simply referred to as a thermal efficiency improvement device) 35 according to a third embodiment of the present invention includes a cylinder 36 and an assembly 37 disposed in the cylinder 36, configurations of which are different from configurations of the cylinder and the assembly according to the first embodiment.
Therefore, only the cylinder 36 and the assembly 37 will be described hereunder, and elements which are the same as those of the device 10 are numbered accordingly, and detailed descriptions of the elements will be omitted.
Also, descriptions of a thermal efficiency improvement method for the heating furnace using the device 35 according to the third embodiment will be omitted because the method is the same as the thermal efficiency improvement method for the heating furnace using the device 10 according to the first embodiment.

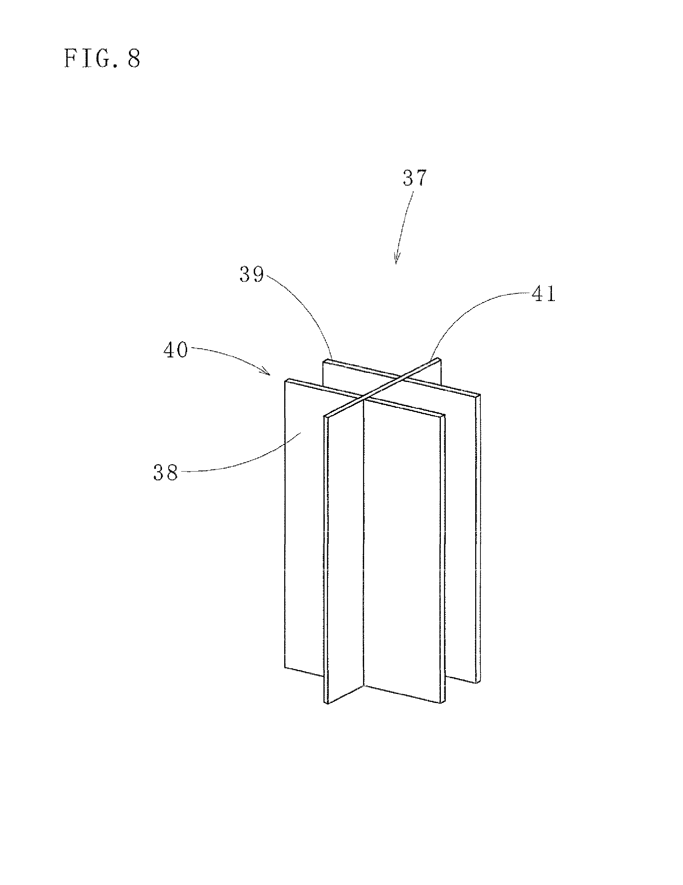

As shown in FIG. 8, the assembly 37 includes a first fabric member group 40 including two of fabric members 38, 39 disposed in parallel at a distance of 5 mm or more, and a fabric member 41 crossing the first fabric member group 40 at a crossing angle of 90 degrees. The fabric members 38, 39, 41 can be composed in the same way as the fabric members 15, 16 used in the device 10 according to the first embodiment.

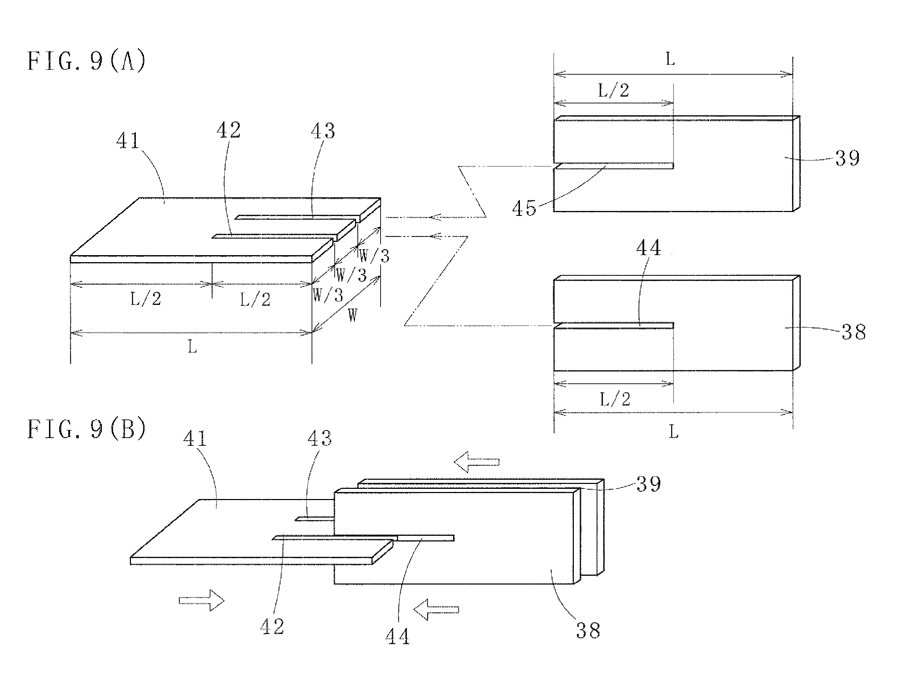

Here, the assembly 37 is formed as follows: as shown in FIG. 9(A), each of cuttings 42, 43 having lengths half of a length L of the fabric member 41 is formed along a longitudinal direction of the fabric member 41 at a point trisecting a length in a width direction of the fabric member 41; at centers in width directions of the fabric members 38, 39, cuttings 44, 45 having lengths half of lengths L of the fabric members 38, 39 are respectively formed along longitudinal directions of the fabric members 38, 39; the fabric members 38, 39, 41 are disposed so that the cuttings 42, 44 face each other on an identical axis, the cuttings 43, 45 face each other on an identical axis, and the fabric members 38, 39 are each orthogonal to the fabric member 41; and as shown in FIG. 9(B), the cuttings 42, 44 are inserted along each other to fit together, and the cuttings 43, 45 are inserted along each other to fit together.

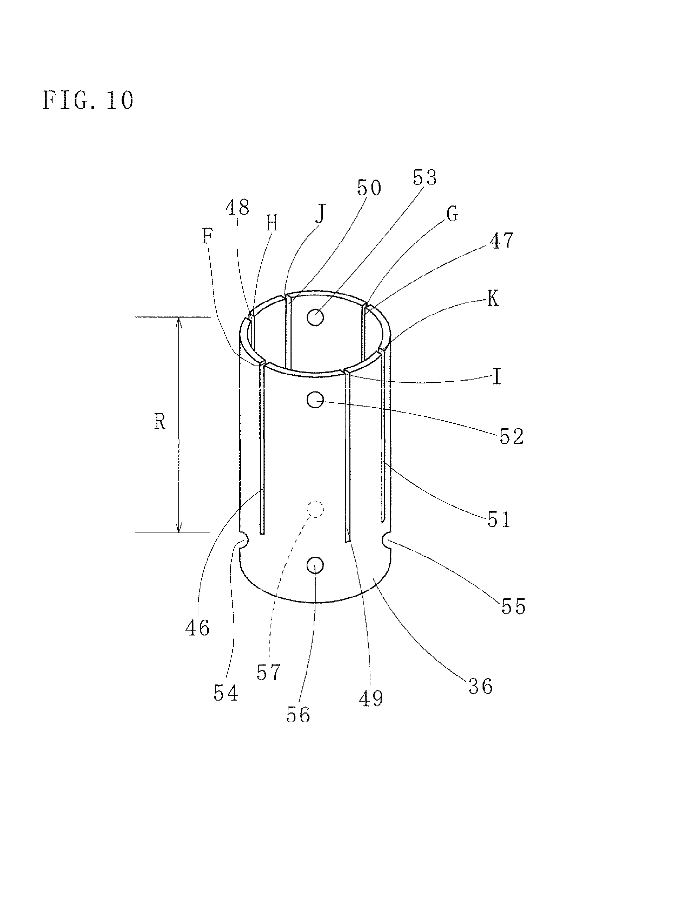

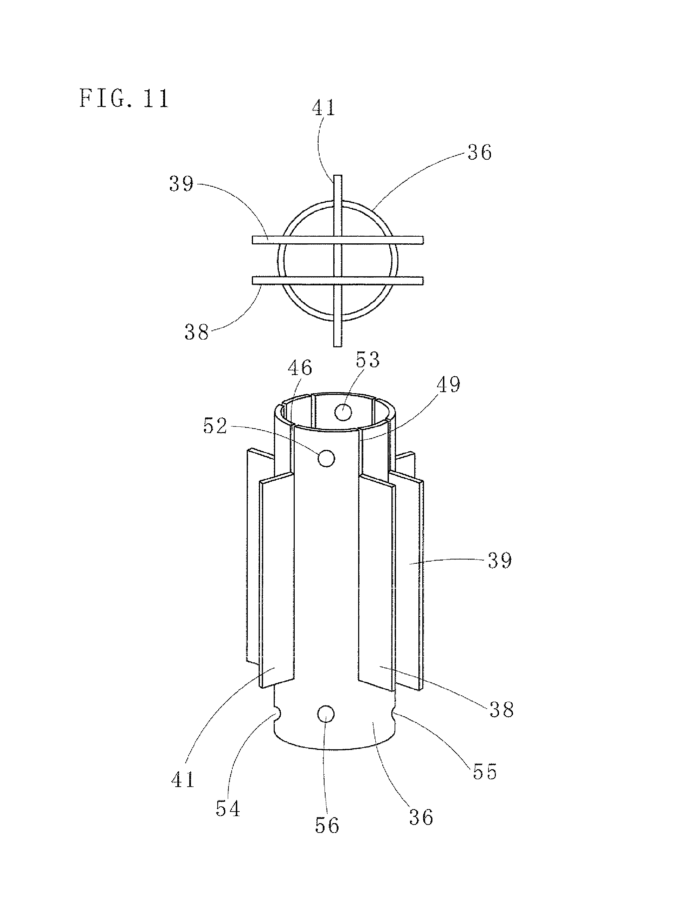

As shown in FIG. 10, a base end (i.e., an end on an exhaust gas outlet side) of the cylinder 36 includes intersections F, G of a straight line passing through a center (i.e., a diameter) of the cylinder 36 and the base end, and intersections H, I, J, K of straight lines orthogonal to a line segment connecting the intersections F, G and the base end, where the straight lines are disposed across the center at a distance of one-third of the fabric member 41 (one-third of the diameter of the cylinder 36). Here, slits 46, 47, 48, 49, 50, 51 having lengths R longer than the lengths L of the fabric members 38, 39, 41 along an axial direction of the cylinder 36 are formed respectively at positions of the intersections F, G, H, I, J, K. Further, the assembly 37 is inserted into the cylinder 36 so that both ends of the assembly 37 along the longitudinal directions of the fabric members 38, 39, 41 are each inserted through the slits 46 to 51. Thereby, as shown in FIG. 11, the fabric members 38, 39 disposed in parallel can be disposed in the cylinder 36 so as to be orthogonal to the fabric member 41 at two different points when viewed in plan. As a result, an inside of the cylinder 36 is divided by the assembly 37 into a plurality of branch passages along a flow of the exhaust gas passing inside the cylinder 36 (passing inside the exhaust port 12).

In FIGs. 10 and 11, reference numerals 52, 53 denote mounting holes through which the ceramic bolt 17 is inserted, and reference numerals 54, 55, 56, 57 denote mounting holes through which the headed bolts 14 are inserted.
Here, when the cylinder 36 with the assembly 37 inserted therein is installed to the exhaust port 12, both ends in width directions of the fabric members 38, 39, 41 projected out of the cylinder 36 are in contact with an inner wall of the exhaust port 12. Thereby, the exhaust gas flows along lateral sides of the fabric members 38, 39, 41 and the cylinder 36.

In the third embodiment, the assembly 37 is formed in a way that the fabric members 38, 39 disposed in parallel are orthogonal to the fabric member 41. Alternatively, two fabric members disposed in parallel can be disposed in a way that the two fabric members and another fabric member cross at a crossing angle of 5 degrees or more and less than 90 degrees. Further, when four or more fabric members are used, an assembly may be formed by (a) a first fabric member group including two or more of the fabric members disposed in parallel at a distance of 5 mm or more and (b) a second fabric member group including two or more of the fabric members disposed in parallel at a distance of 5 mm or more, in a way that the fabric members of the first and second groups cross at a crossing angle of 5 degrees or more. By setting the crossing angle 5 degrees or more, resistance caused while the exhaust gas passes close to crossing sections of the fabric members can be reduced without preventing the flow of the exhaust gas. Here, an assembly with the crossing angle of more than 90 degrees is line-symmetric with an assembly with the crossing angle of less than 90 degrees when viewed in plan, thus an upper limit of the crossing angle is 90 degrees.

The strip-shaped fabric sheet composing the fabric member and the filler may be made by cutting a fabric material made of a woven fabric or a non-woven fabric formed of a heat-resistant inorganic fiber. Here, the heat-resistant inorganic fiber is composed of one of the following: (1) an inorganic substance containing Si, C, O, and M1, where M1 is a metal component selected from Ti, Zr, and Al (an inorganic substance 1); (2) an inorganic substance containing Si, C, and O (an inorganic substance 2); (3) a crystalline inorganic substance consisting of microcrystals of β-SiC (an inorganic substance 3); and (4) an amorphous inorganic substance consisting of Al, Si, and O (an inorganic substance 4). Here, the inorganic substance 1 containing Si, C, O, and M1 contains an aggregate of crystalline ultrafine particles and an amorphous inorganic substance, where the crystalline ultrafine particles have particle sizes of 700 nm or less and consist of β-SiC, M2C, and at least one of a solid solution of β-SiC and M2C and M2C₁₋ₓ (0<x<1), M1 is the metal component selected from Ti, Zr, and Al, M2 is a metal component selected from Ti and Zr, M2C is a carbide of M2, and the amorphous inorganic substance contains Si, C, O, and M1 and exists between the crystalline ultrafine particles. Also, the inorganic substance 2 containing Si, C, and O contains an aggregate of crystalline ultrafine particles of βSiC having particle sizes of 700 nm or less and an amorphous inorganic substance containing Si, C, and O and existing between the crystalline ultrafine particles.

When the inorganic fiber is composed of one of the inorganic substances 1-3, the inorganic fiber has the same composition (a silicon carbide material) as the inner layer of the composite inorganic fiber. Thus, the fabric member composed of the inorganic fiber has the same function as the fabric members 15, 16 used in the thermal efficiency improvement devices for the heating furnaces 10 and 31 according to the first and second embodiments. Since the inorganic fiber is the silicon carbide material, material properties of the inorganic fiber are changed by gradual oxidation in an oxidizing atmosphere at a high temperature, and property degradation of the inorganic fiber (e.g., deterioration of strength and reduction of thermal emissivity) is caused. Thus, if an atmosphere inside the heating furnace in which the device is installed is a low oxidizing atmosphere, an oxidation rate of the inorganic fiber is low. Therefore, the fabric members of the device can maintain their high reflection efficiencies of radiant heat for a long period of time without breakage. Also, such as a batch-type heating furnace, if frequent inspection and maintenance of the fabric members are possible, the fabric members can be used on the premise of their replacement even if the atmosphere inside the heating furnace is an oxidizing atmosphere.

When the inorganic fiber is composed of the inorganic substance 4, compared with the inner layer of the composite inorganic fiber and the inorganic fiber composed of one of the inorganic substances 1-3, a specific heat of the inorganic fiber composed of the inorganic substance 4 is higher and a thermal emissivity thereof is lower. Thus, compared with the composite inorganic fiber or the fabric member made of the inorganic fiber composed of one of the inorganic substances 1-3, a performance of the fabric member made of the inorganic fiber composed of the inorganic substance 4 is lower. Further, in the inorganic fiber composed of the inorganic substance 4, crystallization of the amorphous inorganic substance 4 progresses (crystal grain growth is caused) at a high temperature regardless of whether the inorganic fiber is in an oxidizing atmosphere or in a non-oxidizing atmosphere, so the inorganic fiber becomes brittle. Therefore, if the inorganic fiber forming the fabric member is composed of the inorganic substance 4, the fabric member cannot be used for a long period of time.

According to the first to third embodiments, to form the assembly using the fabric members, cuttings are provided in the fabric members, and then the fabric members are combined so that the cuttings are inserted into each other. Alternatively, the assembly can be formed by attaching the fabric members to frames in which cuttings are formed, and then combining the frames with the fabric members attached thereto with each other. By attaching the fabric members to the frames, it is possible to prevent deformation of the fabric members, and to stably mount the fabric members in the exhaust port (the cylinder).

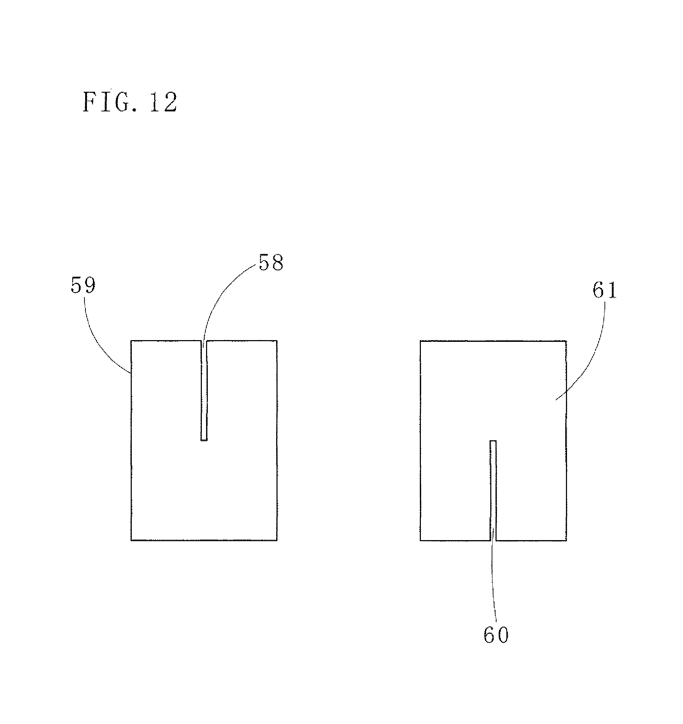

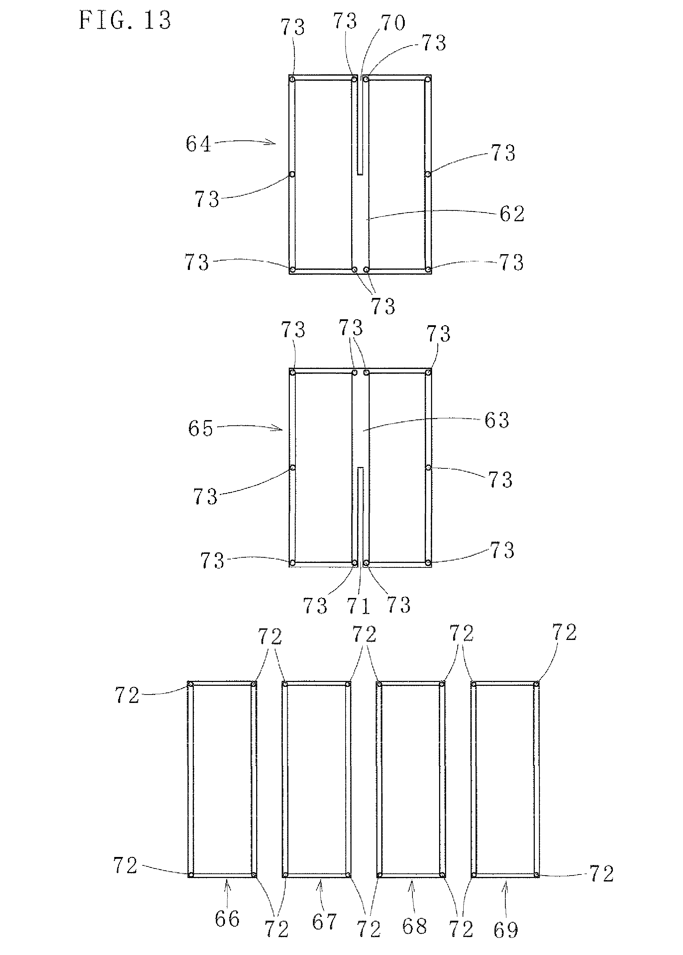

For example, to form an assembly having two of the fabric members attached to the frames such that the fabric members cross orthogonally to each other at centers in width directions of the frames when viewed in plan, as shown in FIG. 12, fabric members 59, 61 are used. In the fabric member 59, from an end in a longitudinal direction (an upper end) at a center in a width direction, a cutting 58 having a length half of a length of the fabric member 59 is formed along the longitudinal direction. In the fabric member 61, from an end in a longitudinal direction (an lower end) at a center in a width direction, a cutting 60 having a length half of a length of the fabric member 61 is formed along the longitudinal direction. As shown in FIG. 13, frames 64, 65 and four small frames 66, 67, 68, 69 are used. The frames 64, 65 are made of a heat-resistant oxide (e.g., alumina) or a heat-resistant non-oxide (e.g., silicon nitride). The frames 64, 65 respectively include vertical bars 62, 63 at centers of width directions of the frames 64, 65, and have sizes large enough to have the fabric members 59, 61 attached thereon. The small frames 66, 67, 68, 69 are mounted to both sides of the vertical bars 62, 63 of the frames 64, 65 with the fabric members 59, 61 attached thereto to sandwich (hold) the fabric members 59, 61 with the frames 64, 6S. In the vertical bar 62, from an end in a longitudinal direction (an upper end) at a center in a width direction, a cutting 70 having a length half of a length of the vertical bar 62 is formed along the longitudinal direction. In the vertical bar 63, from an end in a longitudinal direction (an lower end) at a center in a width direction, a cutting 71 having a length half of a length of the vertical bar 63 is formed along the longitudinal direction.

The fabric member 59 is mounted on the frame 64 in a way that positions of the cuttings 58, 70 coincide with each other. The small frames 66, 67 are then mounted on the fabric member 59 in a way that the small frames 66, 67 are disposed on the both sides of the vertical bar 62. Thus, the fabric member 59 is sandwiched by the frame 64 and the small frames 66, 67. Likewise, the fabric member 61 is mounted on the frame 65 in a way that positions of the cuttings 60, 71 coincide with each other. The small frames 68, 69 are then mounted on the fabric member 61 in a way that the small frames 68, 69 are disposed on the both sides of the vertical bar 63. Thus, the fabric member 61 is sandwiched by the frame 65 and the small frames 68, 69. From mounting holes 72 provided at corners of the small frames 66, 67, 60°, 69, unillustrated pins made of a heat-resistant oxide (e.g., alumina) or a heat-resistant non-oxide (e.g., silicon nitride) are inserted, and tips of the pins are inserted into mounting holes 73 preliminarily formed in the frames 64, 65 and fixed by an heat-resistant inorganic adhesive agent (e.g., made of alumina). By inserting the cutting 71 formed in the vertical bar 63 of the frame 65 into the cutting 70 formed in the vertical bar 62 of the frame 64, the assembly is formed. Instead of the pins, screws made of a heat-resistant oxide (e.g., alumina) or a heat-resistant non-oxide (e.g., silicon nitride) can be used.

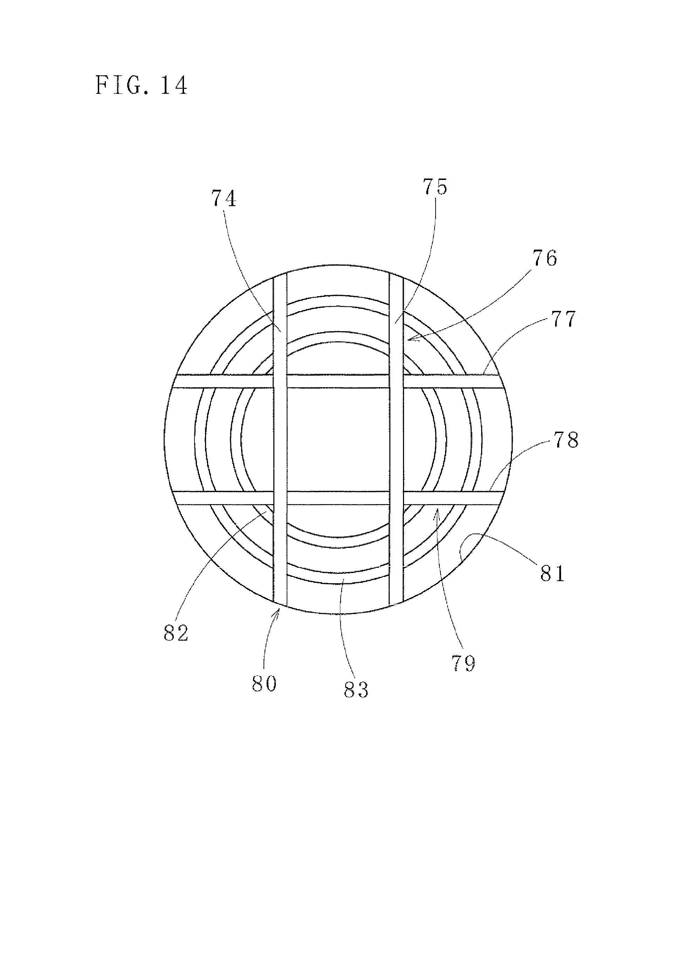

According to the first to third embodiments, when the assembly is installed in the exhaust port, the cylinder is inserted in the exhaust port with the gap between the cylinder and the inner wall of the exhaust port. Alternatively, the cylinder may be inserted in contact with the inner wall.
Also, according to the first to third embodiments, when the assembly is installed in the exhaust port, the one cylinder is used. Alternatively, for example, when an assembly 80 is installed in an exhaust port 81, two concentrically-disposed cylinders 82, 83 may be used as shown in FIG. 14. The assembly 80 includes a first fabric member group 76 including two fabric members 74, 75 disposed in parallel at a distance of 5 mm or more and a second fabric member group 79 including two fabric members 77, 78 disposed in parallel at a distance of 5 mm or more. The assembly 80 is formed by disposing the first fabric member group 76 and the second fabric member group 79 in a way that the fabric members 74, 75 and the fabric members 77, 78 cross at a crossing angle of 90 degrees. By using the double-layered cylinder, the assembly 80 can be installed in the exhaust 81 more firmly. Further, if an inner diameter of the exhaust port is large, three or more of the cylinders, which are multiply disposed in a concentric manner, may be used.
Here, the cylinder is used on the premise that a cross-sectional shape of the exhaust port is circular. However, if the cross-sectional shape of the exhaust port is quadrangular, a quadrangle-tubular body is used.

### EXPERIMENTAL EXAMPLES

### (Experimental Example 1)

By cutting a non-woven fabric (a 10-m roll with a width of 500 mm, a thickness of 5 mm) composed of an inorganic fiber made of an inorganic substance containing Si, C, O, and Zr, a base material with a length of 500 mm and a width of 500 mm was made. The non-woven fabric had a fiber diameter of 11 µm, a mass per unit area of 240 g/m², a void volume fraction of 95%, contained a rayon fiber (an example of a chemical fiber) of 20% by mass. Thereafter, the base material was set in a heat-treating furnace and heated at 800°C for one hour in an argon gas atmosphere. Thereby, a part of the rayon fiber contained in the base material made of the non-woven fabric was dissolved and removed and the other part was carbonized, as well as a sizing agent (an organic substance) applied to the base material was removed (First Process).

The heat-treated base material was sandwiched by two stainless-steel wire nets, which worked as anode electrodes, and then disposed between two cathode electrodes made of C/C composite disposed oppositely at a distance in a tub. Here, the tub contained a dispersion solution in which a powder of zircon (also referred to as zirconium monosilicate, zirconium silicate, or zirconium orthosilicate, i.e., ZrSiO₄), which was an oxide solid solution consisting of elements of Si and Zr selected from the first group, was uniformly dispersed in a mixed solvent of ethanol and water. Thereafter, a direct-current voltage of 120 V from a stabilized DC power supply was applied for 5 minutes to attach the powder of zircon to an external surface of the inorganic fiber composing the non-woven fabric forming the base material by electrophoresis (Second Process).

The base material was taken out from the dispersion solution, the dispersion solution was drained off from the base material, and the base material was air-dried for two hours and was then dried by hot air in an air atmosphere at 40°C for six hours (Third Process). Thereafter, the base material was heated at 1500°C for 0.5 hours in the argon gas atmosphere with a slight pressure of 0.5 MPa to sinter the powder of zircon attached on the external surface of the inorganic fiber and fix the powder to the inorganic fiber. Thereby, the inorganic fiber was changed into a composite inorganic fiber having an inner layer (composed of an inorganic substance containing Si, C, O, and Zr) and an outer layer (consisting of zircon, having a thickness of 2 µm) (Fourth Process). Thus, the non-woven fabric composed of the composite inorganic fiber having a length of 500 mm and a thickness of 5 mm was made.

Two fabric members having widths of 60 mm, lengths of 130 mm, and thicknesses of 5 mm were cut out from the non-woven fabric composed of the composite inorganic fiber. The two fabric members were then crossed with each other at one point when viewed in plan (at a center in a longitudinal direction of each of the fabric members) according to procedures shown in FIGs. 3(A), 3(B), and 3(C). Thus, an assembly was radially formed with the fabric members crossed at a crossing angle of 90 degrees as shown in FIG. 2. Next, as shown in FIG. 4, the assembly was inserted into the cylinder so that both ends along longitudinal directions of the fabric members composing the assembly were inserted through slits each formed along an axial direction of the cylinder at quarter positions in a circumferential direction on a base end of the cylinder. Thereby, as shown in FIG. 5, the assembly was disposed in the cylinder with the crossing angle of the fabric members kept at 90 degrees. Thereafter, a ceramic bolt and headed bolts made of alumina were respectively set on a distal side and on a proximal side of the cylinder. Thus, a thermal efficiency improvement device for a heating furnace was made.

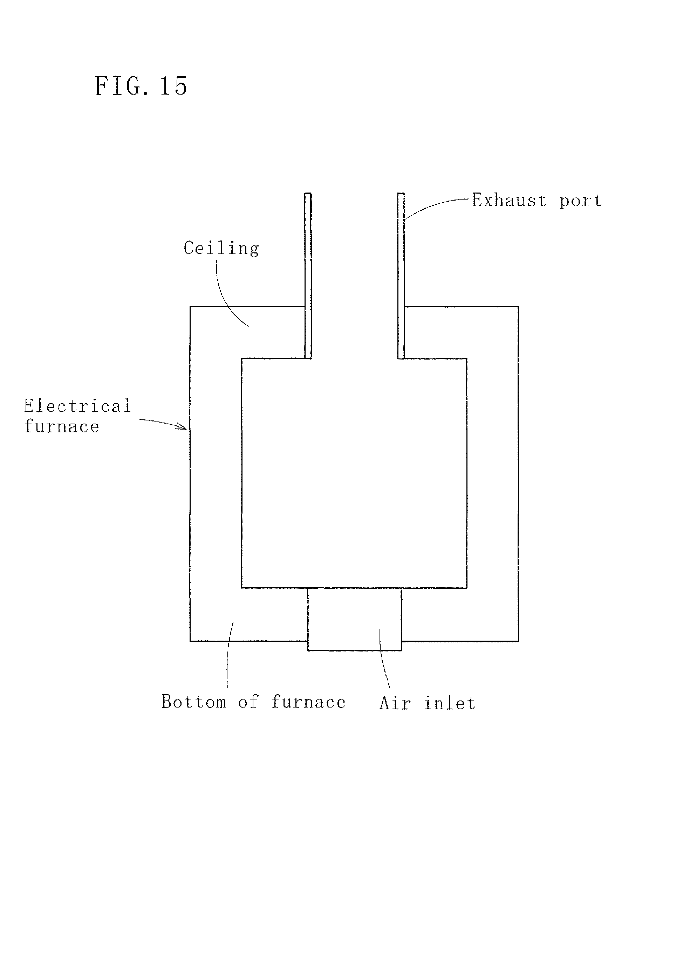

As shown in FIG. 15, from an exhaust gas inlet side (facing an inside of the furnace) of the exhaust port having an inner diameter of 60 mm formed at a center of a ceiling of an electrical furnace, the cylinder of the thermal efficiency improvement device for the heating furnace was inserted with the exhaust gas outlet side thereof foremost into the exhaust port. Thereafter, ends of the headed bolts made of alumina penetrating through the cylinder from an inside thereof were screwed into bolt holes provided in an inner periphery of the exhaust port in advance. The bolt holes were located opposite quarter positions in a circumferential direction of a periphery on the exhaust gas inlet side of the cylinder (positions at 0, 90, 180, and 270 degrees in the circumferential direction). Further, the ceramic bolt was mounted so that the ceramic bolt penetrated through the cylinder from one lateral side to the other lateral side opposing thereto, and each of both ends of the ceramic bolt came in contact with the inner periphery of the exhaust port. Thus, the cylinder was disposed along a longitudinal direction of the exhaust port in a way that both ends in width directions of the fabric members protruding out of the cylinder came in contact with the inner periphery of the exhaust port. Thereby, the thermal efficiency improvement device was installed in the exhaust port of the electrical furnace as shown in FIG. 1.

To confirm a heat radiation function (radiant heat reflection function) by the thermal efficiency improvement device installed in the exhaust port of the electrical furnace, duration of the heat radiation function, and durability of the device, a temperature inside the electrical furnace was constantly kept at 1300°C (controlled by measuring the temperature at a center of the electrical furnace), air was blown from an air inlet formed at a center of a bottom of the electrical furnace into the inside of the electrical furnace at a flow rate of 1 liter per minute for 300 hours, and a reduction rate of a consumed electric power W1 of the electrical furnace was measured. Here, the reduction rate of the consumed electric power W1 was calculated by the following formula, where W0 was a consumed electric power required to constantly keep the temperature of the electrical furnace at 1300°C while air was blown from the air inlet formed at the center of the bottom into the inside of the electrical furnace at the flow rate of 1 liter per minute without the device installed in the exhaust port: 100×(W0-W1)/W0.

Also, heat-shielding effect of the thermal efficiency improvement device installed in the exhaust port of the electrical furnace was examined by comparing (a) a temperature at a lower part of the fabric member of the device measured by a thermocouple attached on a surface of the fabric member of the device facing an inside of the furnace and (b) a temperature at an upper part of the fabric member of the device measured by a thermocouple attached on a surface of the fabric member of the device facing an outside of the furnace. After the device was tested at 1300°C for 300 hours, the device was removed from the exhaust port of the electrical furnace, and the fabric member was taken out to find whether the composite inorganic fiber composing the fabric member was degraded or not by high-temperature oxidation.

A reduction rate of a consumed electric power with the thermal efficiency improvement device was 32%, which was higher than a reduction rate of a consumed electric power without the device. The reduction rate was constant for 300 hours, and it was confirmed that the assembly formed by the fabric members had an excellent heat radiation function. Thus, it was suggested that the assembly contributed to energy saving during operation of the electrical furnace, thereby contributing greatly to reducing CO₂ emissions. Further, there was a difference in temperature between an upper part and a lower part of the device, which was 850°C, and the difference was constant for 300 hours. Therefore, it was confirmed that the fabric members had an excellent heat-shielding function (heat-shielding property).

In addition, when the composite inorganic fiber composing the fabric members taken out after testing was observed by a scanning electron microscope, no degradation of the composite inorganic fiber and no change of a surface microstructure of the fiber by high-temperature oxidation was found at all. Therefore, it was confirmed that the fabric member was able to maintain its performance constantly even at a high temperature of 1300°C for a long period of time.

By a method similar to the above, another thermal efficiency improvement device was made and installed in the exhaust port of the same electrical furnace. Thereafter, a reduction rate of a consumed electric power of the electrical furnace and a difference in temperature between an upper part and a lower part of an assembly (fabric members) were measured in cases where the temperature inside the furnace was kept at 900°C and 300°C, respectively. As a result, a reduction rate of a consumed electric power of the furnace was 28% and a difference in temperature between the upper part and the lower part of the assembly was 430°C when the temperature inside the furnace was kept at 900°C, and a reduction rate of a consumed electric power of the furnace was 25% and a difference in temperature between the upper part and the lower part of the assembly was 150°C when the temperature inside the furnace was kept at 300°C. Accordingly, it was confirmed that the assembly formed by the fabric members had the heat radiation function and the fabric members had the heat-shielding function (heat-shielding property) both in a temperature range where influence of radiant heat was not significant such as at 300°C and in a temperature range where influence of radiant heat appeared such as at 900°C. Also, when the composite inorganic fiber composing the fabric members taken out after testing was observed by the scanning electron microscope, no degradation of the composite inorganic fiber and no change of a surface microstructure of the fiber was found at all.

### (Experimental Example 2)

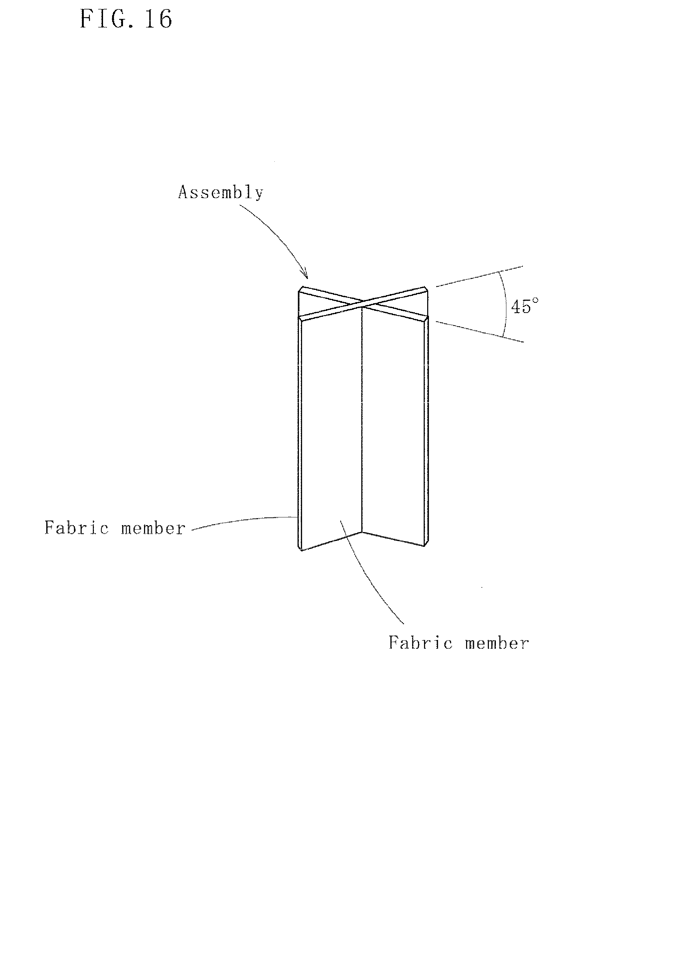

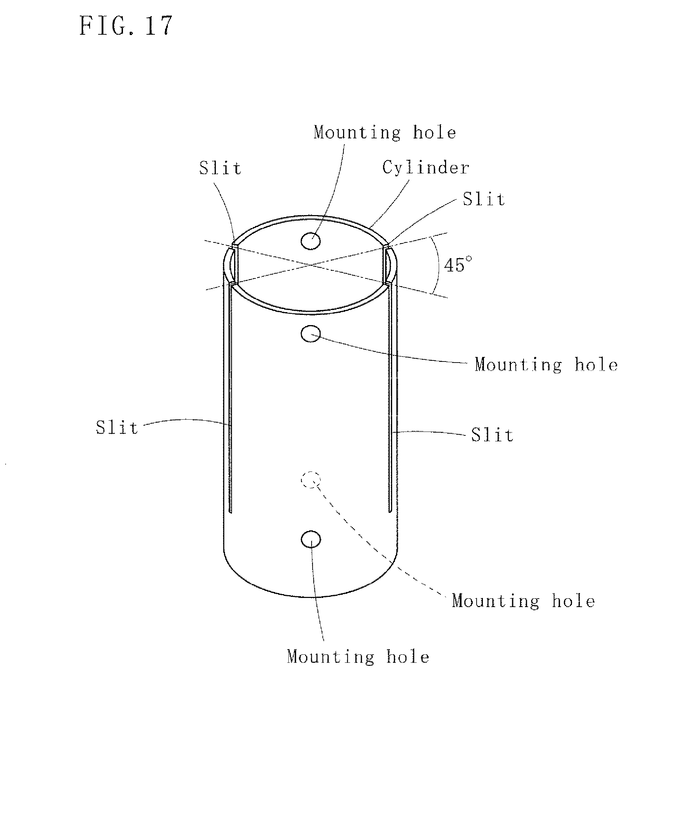

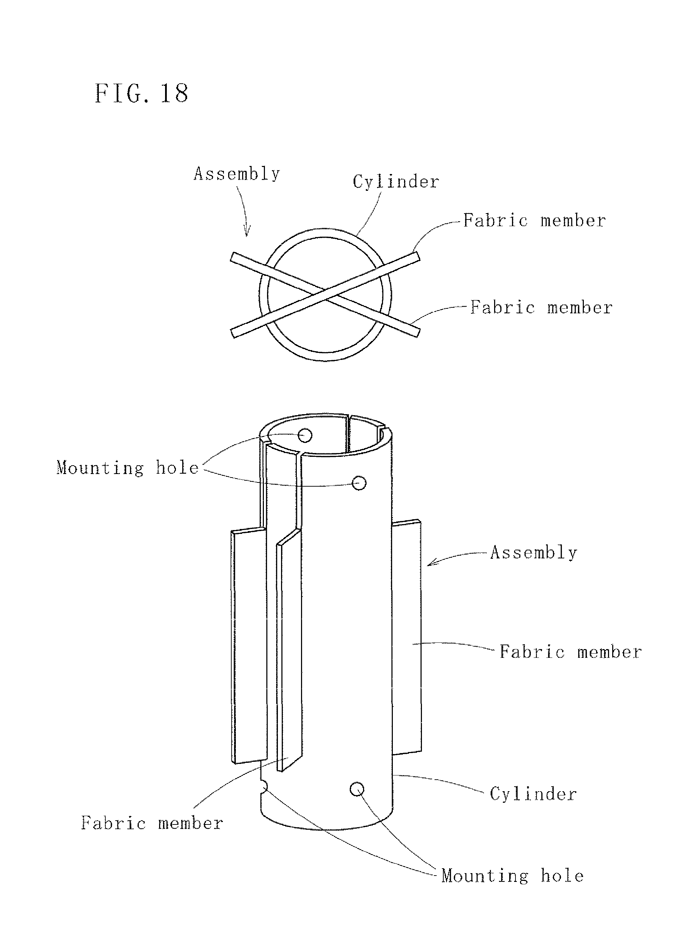

From a non-woven fabric composed of the composite inorganic fiber made in the experimental example 1, two fabric members having a width of 60 mm, a length of 130 mm, and a thickness of 5mm were cut out. Thereafter, by the same procedure as in the experimental example 1, an assembly was radially formed with a minimum crossing angle between the fabric members of 45 degrees as shown in FIG. 16. As shown in FIG. 17, slits (lengths of the slits were longer than the length of the fabric member, i.e., 130 mm) were formed along an axial direction of a cylinder at each position of 0, 45, 180, and 225 degrees in a circumferential direction of a base end of the cylinder. Also, mounting holes for headed bolts made of alumina were formed at quarter positions in a circumferential direction of a periphery of an exhaust gas outlet side of the cylinder, and mounting holes in which a ceramic bolt made of alumina was to be inserted were formed at opposite positions on a periphery of an exhaust gas outlet side of the cylinder. Thereafter, the assembly was inserted into the cylinder so that both ends in the width directions of the fabric members composing the assembly were inserted through the slits each formed in the cylinder. Thereby, as shown in FIG. 18, the assembly was disposed in the cylinder with the minimum crossing angle between the fabric members kept at 45 degrees (i.e., a maximum crossing angle between the fabric members was 135 degrees). Thereafter, the ceramic bolt and the headed bolts were respectively set on the distal side and on the proximal side of the cylinder. Thus, a thermal efficiency improvement device for a heating furnace was made.

From an exhaust gas inlet side of the exhaust port of the electrical furnace used in the experimental example 1, the cylinder of the device was inserted with the exhaust gas inlet side foremost into the exhaust port. Ends of the headed bolts made of alumina penetrating through the cylinder from an inside thereof were screwed into bolt holes provided in an inner periphery of the exhaust port in advance. The bolt holes were located opposite the quarter positions in the circumferential direction of the periphery of the exhaust gas outlet side of the cylinder. Further, the ceramic bolt was mounted so that the ceramic bolt penetrated through the cylinder from one lateral side to the other lateral side facing thereto, and each of both ends of the ceramic bolt came in contact with the inner periphery of the exhaust port. Further, the cylinder was disposed in a way that both ends in width directions of the fabric members protruding out of the cylinder came in contact with the inner periphery of the exhaust port. Thereby, the device was installed in the exhaust port of the electrical furnace.

A heat radiation function (radiant heat reflection function) by the thermal efficiency improvement device installed in the exhaust port of the electrical furnace, duration of the heat radiation function, and durability of the device were confirmed in the same manner as described in the experimental example 1.
A consumed electric power with the device was reduced by 37% from a consumed electric power without the device, that is, a reduction rate was 37%. A difference in temperature between an upper part and a lower part of the device (fabric members) was 880°C. Since the reduction rate and the difference in temperature were constant for 300 hours, it was confirmed that the assembly formed by the fabric members with the minimum crossing angle of 45 degrees had an even greater heat radiation function and an even greater heat-shielding function (heat-shielding property), i.e., the assembly was able to save energy and reduce CO₂ emissions even more than the assembly formed by the fabric members with the crossing angle of 90 degrees used in the experimental example 1. Further, as a matter of course, durability (long-term stability) of the fabric members forming the assembly at 1300°C was also confirmed.

### (Experimental Example 3)

By cutting a non-woven fabric (a 10-m roll having a width of 500 nm, a thickness of 5 mm) composed of an inorganic fiber made of an inorganic substance containing Si, C, O, and Zr, a base material having a length of 500 mm and a width of 500 mm was made. Here, the non-woven fabric had a fiber diameter of 11 µm, a mass per unit area of 240 g/m², a void volume fraction of 95%, contained a rayon fiber of 20% by mass. Thereafter, the base material was set in a heat-treating furnace and heated at 800°C for one hour in an argon gas atmosphere. Thereby, a part of the rayon fiber contained in the base material made of the non-woven fabric was dissolved and removed and the other part was carbonized, as well as a sizing agent applied to the base material was removed. Next, two non-woven fabric specimens having widths of 60 mm, lengths of 130 mm, and thicknesses of 5 mm were cut out from the heat-treated base material. Also, By cutting a plain-woven fabric (a 10-m roll with a width of 400 mm, a thickness of 0.25 mm) composed of an inorganic fiber made of an inorganic substance containing Si, C, O, and Zr, four plain-woven fabric specimens having widths of 60 mm, lengths of 130 mm, and thicknesses of 0.25 mm were cut out. Here, the plain-woven fabric had a mass per unit area of 260 g/m² and an open area ratio of 29%.

By covering each of both surfaces of the non-woven specimens with each of the plain-woven specimens, two laminated fabric materials were made. By forming the laminated fabric materials, for example, if the assembly of the fabric members composed of the non-woven fabric used in the experimental example 1 is used in an industrial heating furnace, it is possible to avoid troubles such as falling of short fibers from the non-woven fabric, airborne short fibers in the heating furnace after the falling, and a damage to the non-woven fabric due to fuzzing when the assembly is installed in the furnace or exhaust gas is generated at a high flow rate in the furnace.
Thereafter, by using the two laminated fabric materials, an assembly having the two laminated fabric materials crossed at a crossing angle of 90 degrees was made by the same procedure in the experimental example 1. The assembly was inserted into a cylinder in the same manner as the experimental example 1, a ceramic bolt and headed bolts were set to assemble a thermal efficiency improvement device for a heating furnace, and then the device was installed in an exhaust port of an electrical furnace.

A heat radiation function by the thermal efficiency improvement device installed in the exhaust port of the electrical furnace, duration of the heat radiation function, and durability of the device were confirmed in the same manner as described in the experimental example 1. As a result, with the assembly formed by the laminated fabric materials inserted in the cylinder, a reduction rate of a consumed electric power was 30% for 150 hours, which was almost the same rate as in the experimental example 1, thus it was confirmed that the assembly formed by the laminated fabric materials had an excellent heat radiation function. Also, a difference in temperature between an upper part and a lower part of the assembly (laminated fabric members) was 850°C, which suggested a heat-shielding function similar to the experimental example 1. Further, if the assembly formed by the fabric materials composed of the non-woven fabric is actually used in an industrial heating furnace, if there are troubles such as falling of short fibers from the non-woven fabric, airborne short fibers in the heating furnace after the falling, and a damage to the non-woven fabric due to fuzzing, it is confirmed that it is possible to avoid the troubles by employing the assembly formed by the laminated fabric materials made by combining the non-woven fabric materials and the plain-woven fabric materials.

After 150 hours passed, the device was removed from the exhaust port of the electrical furnace, and the laminated fabric materials forming the assembly were taken out. Thereafter, states of the inorganic fibers of the non-woven fabric and the plain-woven fabric forming the laminated fabric material were each observed by a scanning electron microscope. As a result, after 150 hours passed at 1300°C, the inorganic fibers were found significantly damaged and degraded already. Therefore, to actually use the assembly at 1300°C, it is necessary to replace the assembly with a new one in relatively short intervals.

### (Experimental Example 4)

One fabric member having a width of 60 mm, a length of 130 mm, and a thickness of 0.33 mm was cut out from a plain-woven fabric (a 5 meter roll having a width of 500 mm, a thickness of 0.33 mm) composed of an inorganic fiber made of an inorganic substance containing Si, C, and O. Here, the plain-woven fabric had a mass per unit area of 289 g/m². Also, slits (lengths of the slits were longer than the length of the fabric member, i.e., 130 mm) were formed along an axial direction of a cylinder at each position of 0 and 180 degrees in a circumferential direction of a base end of the cylinder. Mounting holes for headed bolts were formed at quarter positions in a circumferential direction of a periphery of an exhaust gas inlet side of the cylinder, and mounting holes in which a ceramic bolt was to be inserted were formed at opposite positions on a periphery of an exhaust gas outlet side of the cylinder. Thereafter, the fabric member was inserted into the cylinder so that both ends in a width direction of the fabric member were inserted through the slits each formed in the cylinder. Thereafter, the ceramic bolt and the headed bolts were respectively set on the distal side and on the proximal side of the cylinder. Thus, a thermal efficiency improvement device for a heating furnace was made.

From an exhaust gas inlet side of an exhaust port of an electrical furnace as shown in FIG. 15, the cylinder of the device was inserted with the exhaust gas outlet side foremost into the exhaust port. Ends of the headed bolts penetrating through the cylinder from an inside thereof were screwed into bolt holes provided in advance. The bolt holes were located opposite the quarter positions in the circumferential direction of the periphery of the exhaust gas inlet side of the cylinder. Further, the ceramic bolt was mounted so that the ceramic bolt penetrated through the cylinder from one lateral side to the other lateral side facing thereto, and each of both ends of the ceramic bolt came in contact with the inner periphery of the exhaust port. Further, the cylinder was disposed in a way that both ends in a width direction of the fabric member protruding out of the cylinder came in contact with the inner periphery of the exhaust port. Thereby, the device was installed in the exhaust port of the electrical furnace.

A heat radiation function by the thermal efficiency improvement device installed in the exhaust port of the electrical furnace, duration of the heat radiation function, and durability of the device were confirmed in the same manner as described in the experimental example 1.
As a result, a reduction rate of a consumed electric power was 10% for 150 hours, thus it was confirmed that the fabric member formed by the one plain-woven fabric had a heat radiation function. Here, a difference in temperature between an upper part and a lower part of the fabric member was 380°C, thus it was confirmed that the fabric member also had a heat-shielding function.
After 150 hours passed, the device was removed from the exhaust port of the electrical furnace, and the laminated fabric material forming the assembly was taken out. Thereafter, states of the inorganic fibers of the non-woven fabric and the plain-woven fabric forming the laminated fabric material were each observed by a scanning electron microscope. As a result, after 150 hours passed at 1300°C, the inorganic fibers were found significantly damaged and degraded already. Therefore, to actually use the assembly at 1300°C, it is necessary to replace the assembly with a new one in relatively short intervals.

### (Experimental Example 5)

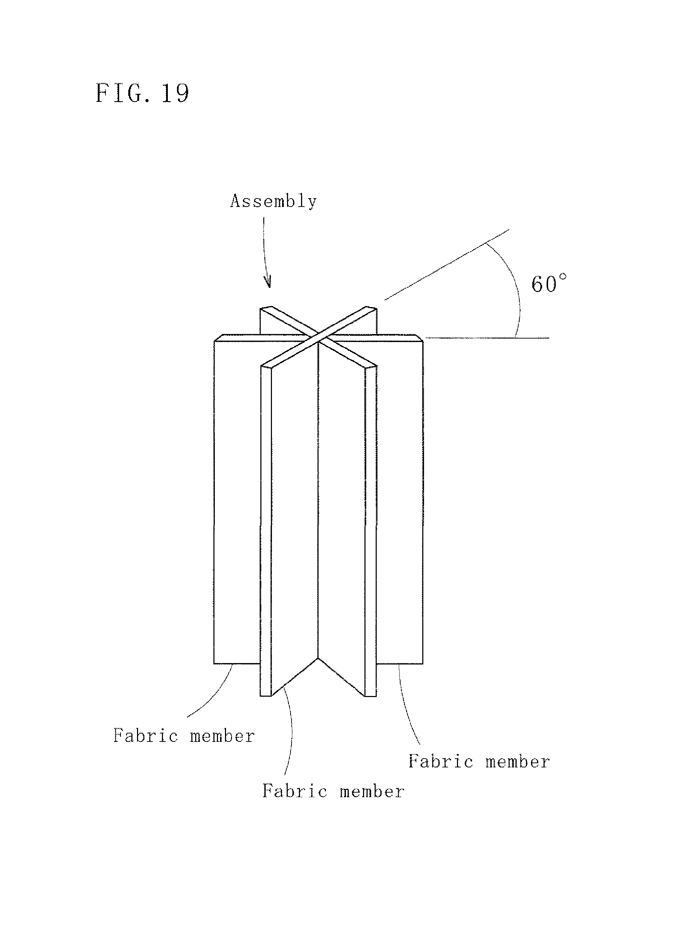

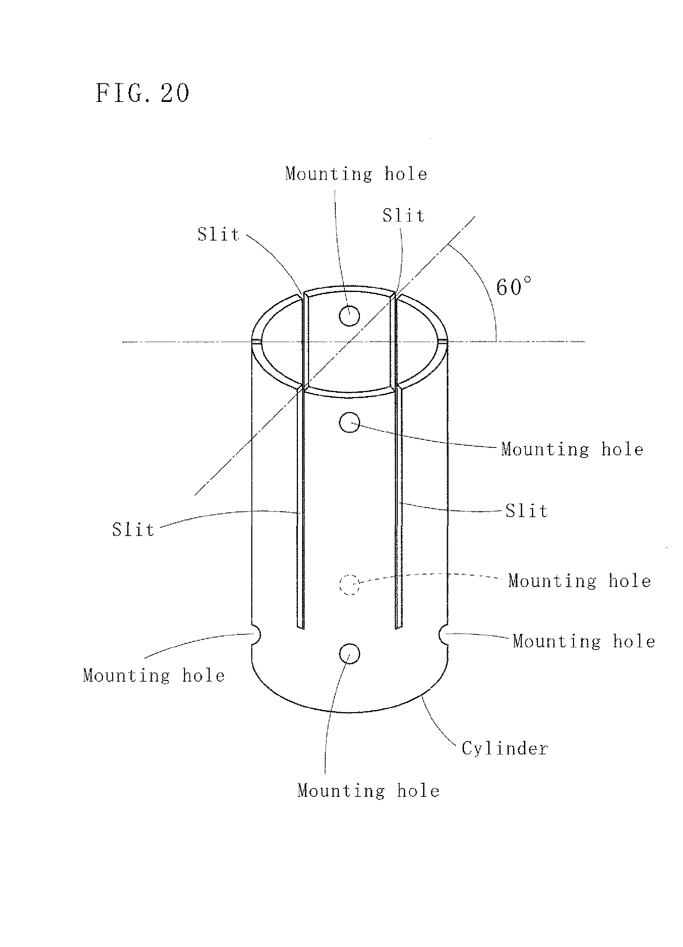

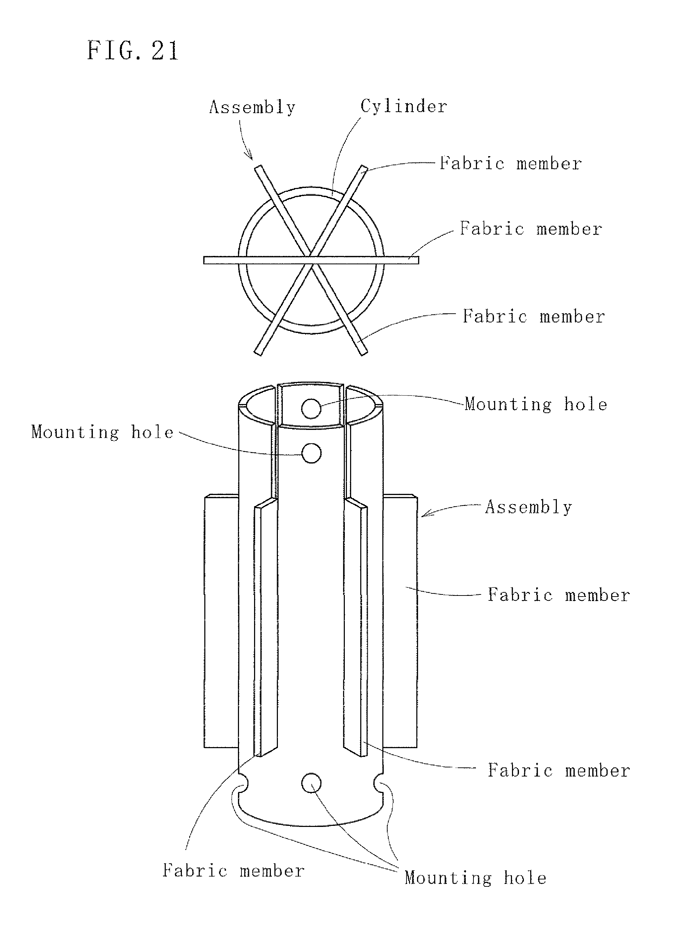

By cutting a non-woven fabric formed by an inorganic fiber (Al-Si-O inorganic fiber) composed of an amorphous inorganic substance containing Al, Si, and O (Al₂O₃ is approximately 30 % and SiO₂ is approximately 70%), three fabric members having widths of 60 mm, lengths of 130 mm, and thicknesses of 5 mm were made. Here, the non-woven fabric had a length of 500 mm, a width of 500 mm, a thickness of 5 mm, and a void volume fraction of 80%.
By using the three fabric members, by the same procedure as in the experimental example 1, an assembly having the three fabric members crossed at a crossing angle between the fabric members of 60 degrees was formed in a radial fashion as shown in FIG. 19. As shown in FIG. 20, slits (lengths of the slits were longer than the length of the fabric member, i.e., 130 mm) were formed along an axial direction of a cylinder at each position of 0, 60, 120, 180, 240, and 300 degrees in a circumferential direction of a base end of the cylinder. Also, mounting holes for headed bolts were formed at quarter positions in a circumferential direction of a periphery of an exhaust gas inlet side of the cylinder, and mounting holes in which a ceramic bolt was to be inserted were formed at opposite positions on a periphery of an exhaust gas outlet side of the cylinder. Thereafter, the assembly was inserted into the cylinder so that both ends in the width directions of the fabric members composing the assembly were inserted through the slits each formed in the cylinder. Thereby, as shown in FIG. 21, the assembly was able to be disposed in the cylinder with the crossing angles between the fabric members kept at 60 degrees. Thereafter, the ceramic bolt and the headed bolts were respectively set on the distal side and on the proximal side of the cylinder. Thus, a thermal efficiency improvement device for a heating furnace was made.

From an exhaust gas inlet side of an exhaust port of an electrical furnace as shown in FIG. 15, the cylinder of the device was inserted with the exhaust gas outlet side foremost into the exhaust port. Ends of the headed bolts penetrating through the cylinder from an inside thereof were screwed into bolt holes provided in advance. The bolt holes were located opposite the quarter positions in the circumferential direction of the periphery of the exhaust gas outlet side of the cylinder. Further, the ceramic bolt was mounted so that the ceramic bolt penetrated through the cylinder from one lateral side to the other lateral side facing thereto, and each of both ends of the ceramic bolt came in contact with the inner periphery of the exhaust port. Further, the cylinder was disposed in a way that both ends in width directions of the fabric members protruding out of the cylinder came in contact with the inner periphery of the exhaust port. Thereby, the device was installed in the exhaust port of the electrical furnace.

A heat radiation function by the device installed in the exhaust port of the electrical furnace, duration of the heat radiation function, and durability of the device were confirmed in the same manner as described in the experimental example 1.
As a result, by installing the device in the exhaust port, a reduction rate of a consumed electric power was 13% for 150 hours, thus it was confirmed that the assembly had a heat radiation function although it was relatively lower than the results of the experimental examples 1-3. Also, a difference in temperature between an upper part and a lower part of the assembly (fabric members) was 530°C, thus it was confirmed that the assembly had a good heat-shielding function.
After 150 hours passed, the device was removed from the exhaust port of the electrical furnace, and the fabric members forming the assembly were taken out. Thereafter, states of the inorganic fibers of the non-woven fabric forming the fabric members were observed by a scanning electron microscope. As a result, after 150 hours passed at 1300°C, the inorganic fibers were found significantly degraded and brittle because crystal grains appeared and grew in the inorganic fibers due to the high temperature. Therefore, to actually use the assembly at 1300°C, it is necessary to replace the assembly with a new one in relatively short intervals.

### (Experimental Example 6)

Three fabric members having widths of 60 mm, lengths of 130 mm, and thicknesses of 5 mm were cut out from the non-woven fabric composed of the composite inorganic fiber made in the experimental example 1. Thereafter, according to procedures shown in FIGs. 9(A) and 9(B), an assembly was formed by disposing the three fabric members in a way that two of the fabric members cross orthogonally to the other fabric member at two points trisecting a length in a width direction of the other fabric member when viewed in plan as shown in FIG. 11. The assembly was inserted into a cylinder so that both ends along longitudinal directions of the fabric members forming the assembly were inserted through slits (lengths of the slits were longer than the length of the fabric member, i.e., 130 mm) formed along an axial direction of the cylinder from a base end of the cylinder as shown in FIG. 10. Thereby, as shown in FIG. 11, an inside of the cylinder was divided into a plurality of branch passages along a flow of exhaust gas passing inside the cylinder. Thereafter, a ceramic bolt and headed bolts were respectively set on a distal side and on an proximal side of the cylinder. Thus, a thermal efficiency improvement device for a heating furnace was made. Next, from an exhaust gas inlet side of the exhaust port of the electrical furnace used in the experimental example 1, the cylinder of the device was inserted with the exhaust gas inlet side foremost into the exhaust port, and the device was installed in the exhaust port in the same manner as described in the experimental example 1.

A heat radiation function by the device installed in the exhaust port of the electrical furnace, duration of the heat radiation function, and durability of the device were confirmed in the same manner as described in the experimental example 1. A reduction rate of a consumed electric power of the electrical furnace and a difference in temperature between an upper part and a lower part of the assembly (fabric members) were measured while a temperature inside the furnace was kept at 1000°C. As a result, the reduction rate was 30% and the difference in temperature was 510°C when the temperature inside the furnace was kept at 1000°C. The reduction rate and the difference in temperature were both constant for 300 hours, thus it was confirmed that the assembly formed by the fabric members had a heat radiation function, and the fabric members had a heat-shielding function (heat-shielding property). Further, when composite inorganic fibers composing the fabric members taken out after testing were observed by a scanning electron microscope, no degradation of the composite inorganic fibers and no change of surface microstructures of the fibers was found at all.

Although the present invention is described above by referring to the embodiments, the present invention is not limited to the configurations of the above-described embodiments, and other embodiments and modifications may be made without departing from the scope of claims of the present invention.
In the present invention, the width of the fabric member (assembly) installed in the exhaust port may be decided in accordance with an inner dimension of the exhaust port. Here, it is necessary to decide the length of the fabric member (assembly) depending on a structure of the exhaust port of the heating furnace, a temperature inside the heating furnace, and a flow rate of exhaust gas passing inside the exhaust port. For example, if a cross section of the exhaust port is circular, where an inner diameter of the exhaust port is D, a length X of the fabric member (assembly) is 0.05D to 5D, or preferably 1D to 4D.

### INDUSTRIAL APPLICABILITY

The device according to the present invention is installed in an exhaust port of an existing heating furnace or a newly-built heating furnace, and reduces effluent heat from the exhaust port by putting radiant heat from the fabric member heated by exhaust gas back into the heating furnace. Thereby, thermal efficiency of the heating furnace is improved, fuel is saved, and CO₂ emissions into the air are reduced.

### REFERENCE SIGNS LIST

10: thermal efficiency improvement device for a heating furnace, 11: ceiling, 12: exhaust port, 13: cylinder, 14: headed bolt, 15, 16: fabric member, 17: ceramic bolt, 18, 19: ceramic nut, 20: assembly, 21, 22: cutting, 23, 24, 25, 26: slit, 27, 28, 29, 29a, 30, 30a: mounting hole, 31: thermal efficiency improvement device for a heating furnace, 32: cylinder, 33: filler, 34: headed bolt (ceramic bolt), 35: thermal efficiency improvement device for a heating furnace, 36: cylinder, 37: assembly, 38, 39: fabric member, 40: first fabric member group, 41: fabric member, 42, 43, 44, 45: cutting, 46, 47, 48, 49, 50, 51: slit, 52, 53, 54, 55, 56, 57: mounting hole, 58: cutting, 59: fabric member, 60: cutting, 61: fabric member, 62, 63: vertical bar, 64, 65: frame, 66, 67, 68, 63: small frame, 70, 71: cutting, 72, 73: mounting hole, 74, 75: fabric member, 76: first fabric member group, 77, 78: fabric member, 79: second fabric member group, 80: assembly, 81: exhaust port, 82, 83: cylinder

## Claims

1. A thermal efficiency improvement method for a heating furnace, comprising:
installing at least one heat-resistant fabric member in an exhaust port of the heating furnace by a supporting member along a flow of exhaust gas passing inside the exhaust port; and
heating the fabric member by the exhaust gas passing through the exhaust port and putting radiant heat from the heated fabric member back into the heating furnace to reduce effluent heat from the exhaust port to out of the heating furnace.

2. The method according to claim 1, wherein the fabric member is made of a woven fabric having a thickness of 0.2 to 10 mm and an open area ratio of 30% or less.

3. The method according to claim 1, wherein the fabric member is made of a non-woven fabric having a thickness of 1 to 10 mm and a void volume fraction of 50% to 97%.

4. The method according to claim 1, wherein the fabric member is formed from a laminated fabric material made by laminating at least one of a woven fabric having a thickness of 0.2 to 10 mm and an open area ratio of 30% or less and a non-woven fabric having a thickness of 1 to 10 mm and a void volume fraction of 50% to 97%.

5. The method according to any one of claims 1 to 4, wherein the fabric member is composed of a composite inorganic fiber having a multi-layered structure including an inner layer and an outer layer, and
where a first group includes the following elements: Al, Ti, Cr, Fe, Si, Co, Ni, Cu, Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os,
the outer layer is composed of a material A consisting of one of the following: (1) an oxide of one element selected from the first group; (2) a complex oxide of two or more elements selected from the first group; (3) an oxide solid solution of two or more elements selected from the first group; (4) the oxide and the complex oxide; (5) the oxide and the oxide solid solution; (6) the complex oxide and the oxide solid solution; and (7) the oxide, the complex oxide, and the oxide solid solution,
a value of a thermal expansion coefficient of the inorganic substance forming the outer layer is within a range of ±10% of a value of a thermal expansion coefficient of the inorganic substance forming the inner layer, and a thickness of the outer layer is 0.2 to 10 µm.

6. The method according to claim 5, wherein where a second group includes the following elements: Y, Yb, Er, Ho, and Dy; a third group includes the following elements: Y, Yb, Er, Ho, Dy, Gd, Sm, Nd, and Lu; at least one of the elements selected from the second group is QE; and at least one of the elements selected from the third group is RE, the oxide solid solution is composed of at least one of the following general formulae: QE₂Si₂O₇, QESiO₅, RE₃Al₅O₁₂, and REAlO₃.

7. The method according to any one of claims 5 and 6, wherein the inner layer is composed of an inorganic substance containing Si, C, O, and M1, where M1 is a metal component selected from Ti, Zr, and Al.

8. The method according to any one of claims 5 and 6, wherein the inner layer is composed of an aggregate of crystalline ultrafine particles and an amorphous inorganic substance, where the crystalline ultrafine particles have particle sizes of 700 nm or less and contain (1) β-SiC, (2) M2C, and (3) at least one of a solid solution of β-SiC and M2C and M2C₁₋ₓ (0<x<1), M1 is a metal component selected from Ti, Zr, and Al, M2 is a metal component selected from Ti and Zr, M2C is a carbide of M2, and the amorphous inorganic substance contains Si, C, O, and M1 and exists between the crystalline ultrafine particles.

9. The method according to any one of claims 5 and 6, wherein the inner layer is composed of an aggregate of crystalline ultrafine particles of β-SiC having particle sizes of 700 nm or less and an amorphous inorganic substance containing Si, C, and O and existing between the crystalline ultrafine particles.

10. The method according to any one of claims 5 and 6, wherein the inner layer is composed of a crystalline inorganic substance consisting of microcrystals of β-SiC.

11. The method according to any one of claims 1 to 4, wherein the fabric member is composed of an inorganic fiber composed of an inorganic substance containing Si, C, O, and M1, where M1 is a metal component selected from Ti, Zr, and Al.

12. The method according to any one of claims 1 to 4, wherein the fabric member is composed of an inorganic fiber composed of an inorganic substance containing Si, C, and O.

13. The method according to any one of claims 1 to 4, wherein the fabric member is composed of an inorganic fiber composed of a crystalline inorganic substance consisting of microcrystals of β-SiC.

14. The method according to any one of claims 1 to 4, wherein the fabric member is composed of an inorganic fiber composed of an amorphous inorganic substance consisting of Al, Si, and O.

15. A thermal efficiency improvement device for a heating furnace, the device installed in an exhaust port of the heating furnace to reduce effluent heat from the exhaust port to out of the heating furnace, the device comprising:
at least one fabric member disposed along a flow of exhaust gas passing inside the exhaust port and heated by the exhaust gas; and
a supporting member fixing the fabric member to the exhaust port,
whereby radiant heat from the heated fabric member is put back into the heating furnace to reduce effluent heat from the exhaust port to out of the heating furnace.

16. The device according to claim 15, wherein the fabric member is formed by one of an inorganic fiber and a composite inorganic fiber having a multi-layered structure including an inner layer and an outer layer.

17. The device according to claim 16, wherein the fabric member is composed of the composite inorganic fiber, and where a first group includes the following elements: Al, Ti, Cr, Fe, Si, Co, Ni, Cu, Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os,
the outer layer of the composite inorganic fiber is composed of a material A consisting of one of the following: (1) an oxide of one element selected from the first group; (2) a complex oxide of two or more elements selected from the first group; (3) an oxide solid solution of two or more elements selected from the first group; (4) the oxide and the complex oxide; (5) the oxide and the oxide solid solution; (6) the complex oxide and the oxide solid solution; and (7) the oxide, the complex oxide, and the oxide solid solution, and further wherein
a value of a thermal expansion coefficient of the inorganic substance forming the outer layer is within a range of ±10% of a value of a thermal expansion coefficient of the inorganic substance forming the inner layer, and a thickness of the outer layer is 0.2 to 10 µm.

18. The device according to claim 17, wherein where a second group includes the following elements: Y, Yb, Er, Ho, and Dy; a third group includes the following elements: Y, Yb, Er, Ho, Dy, Gd, Sm, Nd, and Lu; at least one of the elements selected from the second group is QE; and at least one of the elements selected from the third group is RE, the oxide solid solution consists of at least one of the following general formulae: QE₂Si₂O₇, QESiO₅, RE₃Al₅O₁₂, and REAlO₃.

19. The device according to any one of claims 17 and 18, wherein the inner layer is composed of an aggregate of crystalline ultrafine particles and an amorphous inorganic substance, where the crystalline ultrafine particles have particle sizes of 700 nm or less and contain (1) β-SiC, (2) M2C, and (3) at least one of a solid solution of β-SiC and M2C and M2C₁₋ₓ (0<x<1), M1 is a metal component selected from Ti, Zr, and Al, M2 is a metal component selected from Ti and Zr, M2C is a carbide of M2, and the amorphous inorganic substance contains Si, C, O, and M1 and exists between the crystalline ultrafine particles.

## Amended claims

### Amended claims under Art. 19.1 PCT

**1.** A thermal efficiency improvement method for a heating furnace, comprising:
installing at least one heat-resistant fabric member in an exhaust port of the heating furnace by a supporting member along a flow of exhaust gas passing inside the exhaust port; and
heating the fabric member by the exhaust gas passing through the exhaust port and putting radiant heat from the heated fabric member back into the heating furnace to reduce effluent heat from the exhaust port to out of the heating furnace.

**2.** The method according to claim 1, wherein the fabric member is made of a woven fabric having a thickness of 0.2 to 10 mm and an open area ratio of 30% or less.

**3.** The method according to claim 1, wherein the fabric member is made of a non-woven fabric having a thickness of 1 to 10 mm and a void volume ratio of 50% to 97%.

**4.** The method according to claim 1, wherein the fabric member is formed from a laminated fabric material made by laminating at least one of a woven fabric having a thickness of 0.2 to 10 mm and an open area ratio of 30% or less and a non-woven fabric having a thickness of 1 to 10 mm and a void volume ratio of 50% to 97%.

**5.** The method according to any one of claims I to 4, wherein the fabric member is composed of a composite inorganic fiber having a multi-layered structure including an inner layer and an outer layer, and
where a first group includes the following elements: Al, Ti, Cr, Fe, Si, Co, Ni, Cu,
Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os,
the outer layer is composed of a material A consisting of one of the following: (1) an oxide of one element selected from the first group; (2) a complex oxide of two or more elements selected from the first group; (3) a solid solution oxide of two or more elements selected from the first group; (4) the oxide and the complex oxide; (5) the oxide and the solid solution oxide; (6) the complex oxide and the solid solution oxide; and (7) the oxide, the complex oxide, and the solid solution oxide, a value of a thermal expansion coefficient of the inorganic substance forming the outer layer is within a range of ±10% of a value of a thermal expansion coefficient of the inorganic substance forming the inner layer, and a thickness of the outer layer is 0.2 to 10 µm.

**6.** The method according to claim 5, wherein where a second group includes the following elements: Y, Yb, Er, Ho, and Dy; a third group includes the following elements: Y, Yb, Er, Ho, Dy, Gd, Sm, Nd, and Lu; at least one of the elements selected from the second group is QE; and at least one of the elements selected from the third group is RE, the solid solution oxide is composed of at least one of the following general formulae: QE₂Si₂O₇, QESiO₅, RE₃Al₅O₁₂, and REAlO₃.

**7.** The method according to any one of claims 5 and 6, wherein the inner layer is composed of an inorganic substance containing Si, C, O, and M1, where M1 is a metal component selected from Ti, Zr, and Al.

**8.** The method according to any one of claims 5 and 6, wherein the inner layer is composed of an aggregate of crystalline ultrafine particles and an amorphous inorganic substance, where the crystalline ultrafine particles have particle sizes of 700 nm or less and contain (1) β-SiC, (2) M2C, and (3) at least one of a solid solution of β-SiC and M2C and M2C₁₋ₓ (0<x<1), M1 is a metal component selected from Ti, Zr, and Al, M2 is a metal component selected from Ti and Zr, M2C is a carbide of M2, and the amorphous inorganic substance contains Si, C, O, and M1 and exists between the crystalline ultrafine particles.

**9.** The method according to any one of claims 5 and 6, wherein the inner layer is composed of an aggregate of crystalline ultrafine particles of β-SiC having particle sizes of 700 nm or less and an amorphous inorganic substance containing Si, C, and O and existing between the crystalline ultrafine particles.

**10.** The method according to any one of claims 5 and 6, wherein the inner layer is composed of a crystalline inorganic substance consisting of microcrystals of β-SiC.

**11.** The method according to any one of claims 1 to 4, wherein the fabric member is composed of an inorganic fiber composed of an inorganic substance containing Si, C, O, and M1, where M1 is a metal component selected from Ti, Zr, and Al.

**12.** The method according to any one of claims 1 to 4, wherein the fabric member is composed of an inorganic fiber composed of an inorganic substance containing Si, C, and O.

**13.** The method according to any one of claims 1 to 4, wherein the fabric member is composed of an inorganic fiber composed of a crystalline inorganic substance consisting of microcrystals of β-SiC.

**14.** The method according to any one of claims 1 to 4, wherein the fabric member is composed of an inorganic fiber composed of an amorphous inorganic substance consisting of Al, Si, and O.

**15.** A thermal efficiency improvement device for a heating furnace, the device installed in an exhaust port of the heating furnace to reduce effluent heat from the exhaust port to out of the heating furnace, the device comprising:
at least one fabric member disposed along a flow of exhaust gas passing inside the exhaust port and heated by the exhaust gas; and
a supporting member fixing the fabric member to the exhaust port,
whereby radiant heat from the heated fabric member is put back into the heating furnace to reduce effluent heat from the exhaust port to out of the heating furnace.

**16.** The device according to claim 15, wherein the fabric member is formed by one of an inorganic fiber and a composite inorganic fiber having a multi-layered structure including an inner layer and an outer layer.

**17.** The device according to claim 16, wherein the fabric member is composed of the composite inorganic fiber, and where a first group includes the following elements: Al, Ti, Cr, Fe, Si, Co, Ni, Cu, Y, Zr, Nb, Tc, Ru, Rh, Pd, Ag, La, Ce, Pr, Nd, Pm, Sm, Eu, Gd, Tb, Dy, Ho, Er, Tm, Yb, Lu, Hf, Ta, Re, and Os,
the outer layer of the composite inorganic fiber is composed of a material A consisting of one of the following: (1) an oxide of one element selected from the first group; (2) a complex oxide of two or more elements selected from the first group; (3) a solid solution oxide of two or more elements selected from the first group; (4) the oxide and the complex oxide; (5) the oxide and the solid solution oxide; (6) the complex oxide and the solid solution oxide; and (7) the oxide, the complex oxide, and the solid solution oxide, and further wherein
a value of a thermal expansion coefficient of the inorganic substance forming the outer layer is within a range of ±10% of a value of a thermal expansion coefficient of the inorganic substance forming the inner layer, and a thickness of the outer layer is 0.2 to 10 µm.

**18.** The device according to claim 17, wherein where a second group includes the following elements: Y, Yb, Er, Ho, and Dy; a third group includes the following elements: Y, Yb, Er, Ho, Dy, Gd, Sm, Nd, and Lu; at least one of the elements selected from the second group is QE; and at least one of the elements selected from the third group is RE, the solid solution oxide consists of at least one of the following general formulae: QE₂Si₂O₇, QESiO₅, RE₃Al₅O₁₂, and REAlO₃.

**19.** (Amended) The device according to claim 17, wherein the inner layer is composed of an inorganic substance containing Si, C, O, and M1, where M1 is a metal component selected from Ti, Zr, and Al.

**20.** (Added) The device according to claim 17, wherein the inner layer is composed of an aggregate of crystalline ultrafine particles and an amorphous inorganic substance, where the crystalline ultrafine particles have particle sizes of 700 nm or less and contain (1) β-SiC, (2) M2C, and (3) at least one of a solid solution of β-SiC and M2C and M2C₁₋ₓ (0<x<1), M1 is a metal component selected from Ti, Zr, and Al, M2 is a metal component selected from Ti and Zr, M2C is a carbide of M2, and the amorphous inorganic substance contains Si, C, O, and M1 and exists between the crystalline ultrafine particles.

**21.** (Added) The device according to claim 17, wherein the inner layer is composed of an aggregate of crystalline ultrafine particles of β-SiC having particle sizes of 700 nm or less and an amorphous inorganic substance containing Si, C, and O and existing between the crystalline ultrafine particles.

**22.** (Added) The device according to claim 17, wherein the inner layer is composed of a crystalline inorganic substance consisting of microcrystals of β-SiC.

**23.** (Added) The device according to claim 16, wherein the fabric member is composed of an inorganic fiber composed of an inorganic substance containing Si, C, O, and M1, where M1 is a metal component selected from Ti, Zr, and Al.

**24.** (Added) The device according to claim 16, wherein the fabric member is composed of an inorganic fiber composed of an inorganic substance containing Si, C, and O.

**25.** (Added) The device according to claim 16, wherein the fabric member is composed of an inorganic fiber composed of a crystalline inorganic substance consisting of microcrystals of β-SiC.

**26.** (Added) The device according to claim 16, wherein the fabric member is composed of an inorganic fiber composed of an amorphous inorganic substance consisting of Al, Si, and O.
